(19)

**Europäisches Patentamt**
**European Patent Office**
**Office européen des brevets**

(11) **EP 4 745 956 A1**

(12) **EUROPEAN PATENT APPLICATION**
published in accordance with Art. 153(4) EPC

(43) Date of publication:
**20.05.2026 Bulletin 2026/21**

(21) Application number: **24876315.3**

(22) Date of filing: **04.09.2024**

(51) International Patent Classification (IPC):
*G10L 13/047* (2013.01)     *G10L 25/30* (2013.01)
*G06N 3/0442* (2023.01)

(52) Cooperative Patent Classification (CPC):
**G06N 3/0455; G10L 13/02; G10L 13/033;
G10L 13/04; G10L 13/047; G10L 13/08;
G10L 13/10; G10L 25/30**

(86) International application number:
**PCT/CN2024/116772**

(87) International publication number:
**WO 2025/077495 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023 CN 202311307828**

(71) Applicant: **Tencent Technology (Shenzhen)
Company Limited
Shenzhen, Guangdong 518057 (CN)**

(72) Inventors:
• **GU, Yu
  Shenzhen, Guangdong 518057 (CN)**
• **WENG, Chao
  Shenzhen, Guangdong 518057 (CN)**

(74) Representative: **Gunzelmann, Rainer et al
Wuesthoff & Wuesthoff
Patentanwälte und Rechtsanwalt PartG mbB
Schweigerstraße 2
81541 München (DE)**

(54) **AUDIO SYNTHESIS METHOD AND APPARATUS, AUDIO SYNTHESIS MODEL TRAINING METHOD AND APPARATUS, ELECTRONIC DEVICE, COMPUTER READABLE STORAGE MEDIUM, AND COMPUTER PROGRAM PRODUCT**

(57)     An audio synthesis method and apparatus, an audio synthesis model training method and apparatus, an electronic device, a computer readable storage medium, and a computer program product, relating to artificial intelligence technology. The audio synthesis method comprises: on the basis of language information of a target text and preset style information, calling an audio synthesis model to execute the following processing, wherein the audio synthesis model comprises a prior encoder and a waveform decoder: by means of the prior encoder and on the basis of the language information and the preset style information, generating audio features corresponding to the target text; by means of the prior encoder, performing normalizing flow processing on the audio features to obtain hidden variables of the target text; and by means of the waveform decoder, performing waveform decoding processing on the hidden variables of the target text to obtain a waveform that conforms to an audio style described by the preset style information and corresponds to the target text.

FIG. 3A

**Description**

RELATED APPLICATION

Embodiments of the present disclosure are provided based on Chinese Patent Application No. 202311307828.7, filed on October 10, 2023, and claim priority to the Chinese patent application, which is incorporated herein by reference in its entirety.

FIELD OF THE TECHNOLOGY

The present disclosure relates to artificial intelligence technologies, and in particular, to an audio synthesis method, an audio synthesis model training method, an apparatus, an electronic device, a computer-readable storage medium, and a computer program product.

BACKGROUND OF THE DISCLOSURE

Audio synthesis is one of important applications in the field of artificial intelligence, and can generate artificial audio by using mechanical and electronic methods.

Audio synthesis modes in related technologies are relatively rough. Generally, a Mel spectrogram diagram of text data is first predicted by using an acoustic model, and then an audio waveform is generated by using a vocoder with reference to the Mel spectrogram, to synthesize the Mel spectrogram corresponding to the text data, thereby obtaining audio data corresponding to the text data. This synthesis method cannot achieve precise audio synthesis, and is prone to causing artifacts in the synthesized audio, thereby affecting the user experience of normal audio synthesis.

SUMMARY

Embodiments of the present disclosure provide an audio synthesis method, an audio synthesis model training method, an apparatus, an electronic device, a computer-readable storage medium, and a computer program product, which can improve quality and expressiveness of audio synthesis.

Technical solutions in the embodiments of the present disclosure are implemented as follows:

An embodiment of the present disclosure provides an audio synthesis method, applied to an electronic device, and including the following operations:

invoking an audio synthesis model based on linguistic information and preset style information for a target text to perform the following processing, the audio synthesis model including a prior encoder and a waveform decoder:

generating audio features corresponding to the target text based on the linguistic information and the preset style information by using the prior encoder;

performing normalizing flow processing on the audio features by using the prior encoder, to obtain a latent variable of the target text; and

performing waveform decoding on the latent variable of the target text by using the waveform decoder, to obtain a synthetic waveform conforming to an audio style described in the preset style information and corresponding to the target text.

An embodiment of the present disclosure provides an audio synthesis model training method, applied to an electronic device, an audio synthesis model including a prior encoder, a posterior encoder, a waveform decoder, and a discriminator; and the method including the following operations:

acquiring sample linguistic information and sample style information for a text sample, a waveform annotation of the text sample, and a spectrogram corresponding to the waveform annotation;

encoding the spectrogram corresponding to the waveform annotation and the sample style information by using the posterior encoder, to obtain a latent variable of the spectrogram;

performing waveform decoding on the latent variable of the spectrogram by using the waveform decoder, to obtain a synthetic waveform conforming to an audio style described in the sample style information and corresponding to the text sample;

discriminating the synthetic waveform by using the discriminator to obtain a discrimination result;

encoding the sample linguistic information and the sample style information by using the prior encoder, to obtain a latent variable of the text sample; and

training the audio synthesis model based on the latent variable of the text sample, the latent variable of the spectrogram and the discrimination result to obtain a trained audio synthesis model.

An embodiment of the present disclosure provides an audio synthesis apparatus, including:
an invoking module, configured to invoke an audio synthesis model based on linguistic information and preset style information for a target text to perform the following processing, the audio synthesis model including a prior encoder and a waveform decoder:

a generation module, configured to generate audio features corresponding to the target text based on the linguistic information and the preset style information by using the prior encoder;

a normalization module, configured to perform normalizing flow processing on the audio features by using the prior encoder, to obtain a latent variable of the target text; and

a waveform decoding module, configured to perform waveform decoding on the latent variable of the target text by using the waveform decoder, to obtain a synthetic waveform conforming to an audio style described in the preset style information and corresponding to the target text.

An embodiment of the present disclosure provides an audio synthesis model training apparatus, the audio synthesis model including a prior encoder, a posterior encoder, a waveform decoder, and a discriminator; the apparatus including:

an acquisition module, configured to acquire sample linguistic information and sample style information for a text sample, a waveform annotation of the text sample, and a spectrogram corresponding to the waveform annotation;

a posterior module, configured to encode the spectrogram corresponding to the waveform annotation and the sample style information by using the posterior encoder to obtain a latent variable of the spectrogram;

a decoding module, configured to perform waveform decoding on the latent variable of the spectrogram by using the waveform decoder, to obtain a synthetic waveform conforming to an audio style described in the sample style information and corresponding to the text sample;

a discrimination module, configured to discriminate the synthetic waveform and the waveform annotation by using the discriminator to obtain a discrimination result;

a prior module, configured to encode the sample linguistic information and the sample style information by using the prior encoder, to obtain a latent variable of the text sample; and

a training module, configured to train the audio synthesis model based on the latent variable of the text sample, the latent variable of the spectrogram and the discrimination result to obtain a trained audio synthesis model.

An embodiment of the present disclosure provides an electronic device, including:

a memory, configured to store a computer program or computer-executable instructions; and

a processor, configured to implement the audio synthesis method or the audio synthesis model training method provided in the embodiments of the present disclosure when executing the computer program or the computer-executable instructions stored in the memory.

An embodiment of the present disclosure provides a computer-readable storage medium, having a computer program or computer-executable instructions stored therein, the computer program or computer-executable instructions, when executed by a processor, implementing the audio synthesis method or the audio synthesis model training method provided in the embodiments of the present disclosure.

An embodiment of the present disclosure provides a computer program product, having a computer program or computer-executable instructions stored therein, the computer program or computer-executable instructions, when executed by a processor, implementing the audio synthesis method or the audio synthesis model training method provided in the embodiments of the present disclosure.

The embodiments of the present disclosure have the following beneficial effects:

Audio features corresponding to the target text are generated by using the prior encoder, and normalizing flow processing is performed on the audio features to obtain a latent variable of the target text. Then, waveform decoding is performed on the latent variable of the target text by using the waveform decoder, to directly generate a synthetic waveform. Compared with the related technologies, it is not necessary to generate a synthetic waveform by using the vocoder with reference to the intermediate product, Mel spectrogram, to avoid generation of artifacts, thereby achieving precise audio generation based on the accurate latent variable, and improving quality and expressiveness of audio synthesis.

BRIEF DESCRIPTION OF THE DRAWINGS

FIG. 1 is a schematic diagram of an application scenario of an audio synthesis system according to an embodiment of the present disclosure.

FIG. 2A to FIG. 2B are schematic structural diagrams of an electronic device according to an embodiment of the present disclosure.

FIG. 3A to FIG. 3F are flow diagrams of an audio synthesis method according to an embodiment of the present disclosure.

FIG. 4A to FIG. 4B are flow diagrams of an audio synthesis model training method according to an embodiment of the present disclosure.

FIG. 5 is a schematic diagram of an audio synthesis model according to an embodiment of the present disclosure.

FIG. 6 is a schematic diagram of a linguistic encoder according to an embodiment of the present disclosure.

FIG. 7 is a schematic diagram of a frame-level encoder according to an embodiment of the present disclosure.

FIG. 8 is a schematic diagram of a posterior encoder according to an embodiment of the present disclosure.

FIG. 9 is an example of pitch contour of different DurIAN models according to an embodiment of the present disclosure.

FIG. 10 is a schematic diagram of spectra of different TTS models according to an embodiment of the present disclosure.

DESCRIPTION OF EMBODIMENTS

To make the purpose, technical solutions, and advantages of the present disclosure clearer, the present disclosure will be further described below in detail in combination with the drawings. The described embodiments are not to be construed as limitations on the present disclosure. All other embodiments obtained by a person skilled in the art without contributing creative efforts shall fall within the protection scope of the present disclosure.

In the following descriptions, the terms "first" and "second" are merely intended to distinguish between similar objects rather than describe a specific order of objects. The terms "first" and "second" may, where permitted, be interchangeable in a particular order or sequence, so that the embodiments of the present disclosure described herein can be performed in an order other than that illustrated or described herein.

"Some embodiments" involved in the following description describes a subset of all possible embodiments. However, "some embodiments" may be same or different subsets of all the possible embodiments, and may be combined with each other when there is no conflict.

Related data such as user information is involved in the embodiments of the present disclosure. When the embodiments of the present disclosure are applied to a specific product or technology, user permission or consent is required, and collection, use, and processing of related data need to comply with related laws, regulations, and standards in related countries and regions.

In the embodiments of the present disclosure, a term "module" or "unit" refers to a computer program having predetermined functions or a part of the computer program, operates with other relevant portions to achieve a predetermined objective, and may be fully or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including functions of the module or unit.

Unless otherwise defined, all technical and scientific terms used herein have the same meanings as those generally understood by a person skilled in the art in the present disclosure. The terms used herein are intended to merely describe the embodiments of the present disclosure, not to limit the present disclosure.

Before the embodiments of the present disclosure are further described in detail, nouns and terms involved in the embodiments of the present disclosure are described, and applicable to the following explanation.

1) The expression "in response to": is configured for representing a condition or status on which to-be-performed operations depend. When the dependence condition or status is met, one or more operations may be performed in real time or at a set delay. Unless otherwise specified, there is no chronological limitation to the plurality of to-be-performed operations.

2) A convolutional neural network (CNN) is a type of feedforward neural network (FNN) including convolutional computation and having a deep structure, and is one of the representative algorithms of deep learning. The convolutional neural network has a representation learning capability, and can perform shift-invariant classification on an input image according to a hierarchical structure thereof.

3) A recurrent neural network (RNN) is a type of recursive neural network where sequence data is used as an input, recursion is performed in a sequence evolution direction, and all nodes (recurrent units) are connected in a chain mode. The recurrent neural network has memory, parameter sharing, and Turing Completeness, and therefore has advantages when learning nonlinear features of sequences.

4) A phoneme is the smallest basic unit in audio, and is the basis on which human beings can distinguish one word from another. Phonemes constitute syllables, and syllables constitute different words and phrases.

5) A hidden state is a sequence outputted by a decoder (for example, a hidden Markov model) to represent spectral data, and smoothing is performed on a hidden state to obtain corresponding spectral data. An audio signal is a non-stationary signal within a long time period (for example, more than one second) and may be approximated as a stationary signal within a short time period (for example, 50 milliseconds). A characteristic of a stationary signal is that the spectrum distribution of the signal is stable, and spectrum distributions in different time periods are similar. The hidden Markov model classifies a continuous signal corresponding to a small similar spectrum into a hidden state. The hidden state is a state actually hidden in a Markov model, and cannot be obtained through direct observation to represent a sequence of spectrum data. A training process of the hidden Markov model is maximizing the likelihood. Data generated in each hidden state is represented by using a probability distribution. Only when similar continuous signals are classified into the same state can the likelihood be as large as possible.

6) Timbre: Different audios always have distinctive characteristics in terms of waveforms, and different objects have different features in terms of vibrations. Due to different materials and structures of different sound sources, timbres of emitted audios are different. For example, a piano, a violin, and a person make different sounds, and each person makes different audios, that is, a timbre may be understood as a feature of an audio.

7) A target object is a real object in the real world or a virtual object in a virtual scenario, for example, a real user, a virtual person, a virtual animal, or an animation person.

8) A text to speech (TTS) technology uses outstanding actions in linguistics and psychology to intelligently convert a text into a natural speech stream through design of a neural network under support of a built-in chip. In the TTS technology, a text file is converted in real time, with the conversion time being as short as seconds. Under an action of a special intelligent speech controller, speech output by the text is smooth in temperament, so that a listener feels natural when listening to information, without apathy and jerky feel of machine speech output.

9) A loss value is configured for representing a difference between an output result and an actual result (or referred to as an annotation result) of a model. Training of the model mainly involves two processes: forward propagation and back propagation. With a neural network model including an input layer, a hidden layer, and an output layer as an example, forward propagation processing means sequentially performing processing by using the input layer, the hidden layer, and the output layer, to finally obtain an output result; and back propagation processing refers to sequentially propagating a computed loss value to the output layer, the hidden layer, and the input layer, so as to update a weight parameter in each layer.

Embodiments of the present disclosure provide an audio synthesis method, an audio synthesis model training method, an apparatus, an electronic device, a computer-readable storage medium, and a computer program product, which can improve accuracy of audio synthesis.

The audio synthesis method and the audio synthesis model training method provided in the embodiments of the present disclosure may be implemented by using an artificial intelligence (AI) technology. The audio synthesis method provided in this embodiment of the present disclosure may be independently implemented by a terminal; or may be implemented by the terminal and the server in coordination. For example, the terminal independently undertakes an audio synthesis method or an audio synthesis model training method described below. Alternatively, the terminal transmits an audio generation request (including linguistic information and preset style information of the target text) to the server. The server performs the audio synthesis method according to the received audio synthesis request, and in response to the audio generation request, generates a synthetic waveform based on the linguistic information and preset style information of the target text, thereby intelligently and precisely generating an audio.

The following describes an exemplary application of the electronic device provided in this embodiment of the present disclosure. The electronic device provided in this embodiment of the present disclosure may be implemented as various types of user terminals, such as a notebook computer, a tablet computer, a desktop computer, a set-top box, a mobile device (for example, a mobile phone, a portable music player, a personal digital assistant, a dedicated messaging device, a portable gaming device, or an in-vehicle device), a smartphone, a smart speaker, a smartwatch, a smart television, and an in-vehicle terminal. In some embodiments, the server 100 may be an independent physical server, or may be a server cluster composed of a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform, where the cloud service may be an audio synthesis service for the terminal to invoke.

The following describes an exemplary application in which the electronic device is implemented as a server.

With the server as an example, for example, the server may be a server cluster deployed in the cloud, offering AI as a service (AiaaS) to users. An AIaaS platform splits several common AI services and provides an independent or packaged service in the cloud. This service mode is similar to an AI theme store. All users may access, in a mode of an application programming interface, one or more AI services provided by the AIaaS platform.

For example, one of the AI cloud services may be an audio synthesis service, that is, an audio synthesis program provided in this embodiment of the present disclosure is encapsulated in a server in the cloud. A user invokes an audio synthesis service in a cloud service by using a terminal (where a client runs, for example, a sound client or an in-vehicle client), so that a server deployed in the cloud invokes an encapsulated audio synthesis program, and generates a synthetic waveform based on the linguistic information and preset style information of the target text, thereby intelligently and precisely generating an audio.

As an application example, for an in-vehicle client, when driving, a user is inconvenient to understand information in a text form, but can understand information in a mode of reading audio, to avoid missing important information. For example, when a user is driving, a leader transmits a text of an important conference to the user, and the user needs to read and process the text in time. Therefore, after receiving the text, the in-vehicle client needs to convert the text into an audio, to play the audio to the user, and perform synthesis processing based on style information of the leader and the target text to obtain a synthetic waveform conforming to the style of the leader and corresponding to the target text, to play the generated audio to the user, so that the user can read the audio of the leader in time.

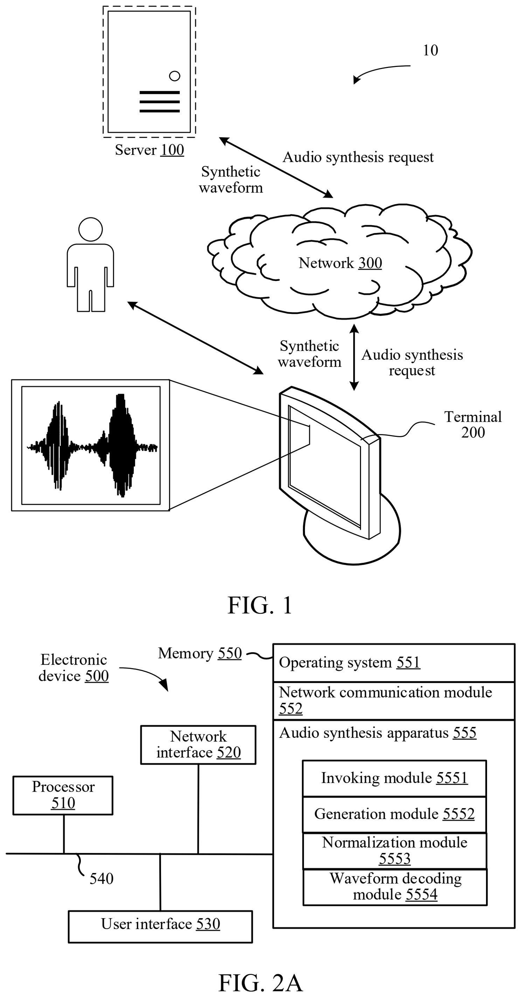

FIG. 1 is a schematic diagram of an application scenario of an audio synthesis system 10 according to an embodiment of the present disclosure. A terminal 200 is connected to a server 100 over a network 300, and the network 300 may be a wide area network, a local area network (LAN), or a combination thereof.

The terminal 200 (where a client runs, for example, a sound client or an in-vehicle client) can be configured to acquire an audio synthesis request. For example, if the user enters the linguistic information and preset style information of the target text through the terminal 200, the terminal 200 automatically acquires the linguistic information and preset style information of the target text and automatically generates an audio generation request.

In some embodiments, an audio synthesis plug-in may be implanted into a client running in a terminal, to locally implement an audio synthesis method and an audio synthesis model training method at the client. For example, after acquiring an audio synthesis request (including linguistic information and preset style information of a target text), the terminal 200 invokes a training plug-in of an audio synthesis model, to implement an audio synthesis model training method. First, a spectrogram corresponding to a waveform annotation and sample style information are encoded by using a posterior encoder, to obtain a latent variable of the spectrogram; waveform decoding is performed on the latent variable of the spectrogram by using a waveform decoder to obtain a synthetic waveform conforming to an audio style described in the sample style information and corresponding to the text sample; the synthetic waveform is discriminated by using a discriminator, to obtain a discrimination result; the sample linguistic information and the sample style information are encoded by using a prior encoder, to obtain a latent variable of the text sample; and the audio synthesis model is trained based on the latent variable of the text sample, the latent variable of the spectrogram and the discrimination result to obtain a trained audio synthesis model. Then, the terminal 200 invokes an audio synthesis plug-in based on the audio synthesis request, to invoke the trained audio synthesis model based on the linguistic information and preset style information of the target text, where the audio synthesis model includes a prior encoder and a waveform decoder; audio features corresponding to the target text are generated based on the linguistic information and the preset style information by using the prior encoder; normalizing flow processing is performed on the audio features by using the prior encoder, to obtain a latent variable of the target text; and waveform decoding is performed on the latent variable of the target text by using the waveform decoder, to obtain a synthetic waveform conforming to the audio style described in the preset style information and corresponding to the target text, thereby intelligently and precisely generating an audio in response to the audio synthesis request.

In some embodiments, after acquiring an audio synthesis request, the terminal 200 invokes an audio synthesis interface of a server 100 (which may be provided in a form of a cloud service, that is, an audio generation service), and the server 100 invokes a training plug-in of an audio synthesis model, to implement an audio synthesis model training method. First, a spectrogram corresponding to a waveform annotation and sample style information are encoded by using a posterior encoder, to obtain a latent variable of the spectrogram; waveform decoding is performed on the latent variable of the spectrogram by using a waveform decoder to obtain a synthetic waveform conforming to an audio style described in the sample style information and corresponding to the text sample; the synthetic waveform is discriminated by using a discriminator, to obtain a discrimination result; the sample linguistic information and the sample style information are encoded by using a prior encoder, to obtain a latent variable of the text sample; and the audio synthesis model is trained based on the latent variable of the text sample, the latent variable of the spectrogram and the discrimination result to obtain a trained audio synthesis model. Then, the server 100 invokes an audio synthesis plug-in, to invoke the trained audio synthesis model based on the linguistic information and preset style information of the target text, where the audio synthesis model includes a prior encoder and a waveform decoder; audio features corresponding to the target text are generated based on the linguistic information and the preset style information by using the prior encoder; normalizing flow processing is performed on the audio features by using the prior encoder, to obtain a latent variable of the target text; and waveform decoding is performed on the latent variable of the target text by using the waveform decoder, to obtain a synthetic waveform conforming to the audio style described in the preset style information and corresponding to the target text, and the synthetic waveform is sent to the terminal 200, thereby intelligently and precisely generating an audio in response to the audio synthesis request.

In some embodiments, the terminal or the server may implement the audio synthesis method or the audio synthesis model training method provided in embodiments of the present disclosure by running various computer-executable instructions or a computer program. For example, the computer-executable instructions may be microprogram-level commands, machine instructions, or software instructions. The computer program may be a native program or a software module in an operating system; may be a native application (APP), i.e., a program that needs to be installed in an operating system to run, such as audio applications or instant messaging (IM) applications; or may be a mini program that may be embedded in any APP, i.e., a program that only needs to be downloaded into a browser environment to run. To sum up, the above computer-executable instructions may be instructions in any form, and the above computer program may be an application, a module, or a plugin in any form.

The following describes a structure of an electronic device according to an embodiment of the present disclosure. FIG. 2A is a schematic structural diagram of an electronic device 500 according to an embodiment of the present disclosure. With the electronic device 500 being a terminal as an example, the electronic device 500 for audio synthesis shown in FIG. 2A includes: at least one processor 510, a memory 550, at least one network interface 520, and a user interface 530. Components in the electronic device 500 are coupled together through a bus system 540. The bus system 540 is configured to implement connection and communication between the components. In addition to a data bus, the bus system 540 further includes a power bus, a control bus, and a state signal bus. However, for clear description, various types of buses are marked as the bus system 540 in FIG. 2A.

The processor 510 may be an integrated circuit chip, and has a signal processing capability, such as a general-purpose processor, a digital signal processor (DSP), or other programmable logic devices, a discrete gate or a transistor logic device, or a discrete hardware assembly, where the general-purpose processor may be a microprocessor or any conventional processor.

The memory 550 includes a volatile memory or a non-volatile memory, or may include both a volatile memory and a non-volatile memory. The non-volatile memory may be a read-only memory (ROM), and the volatile memory may be a random access memory (RAM). The memory 550 described in this embodiment of the present disclosure is intended to include any suitable type of memories. In one embodiment, the memory 550 includes one or more storage devices physically away from the processor 510.

In some embodiments, the memory 550 can store data to support various operations. Examples of the data include a program, a module, and a data structure, or a subset or a superset thereof, which are exemplarily described below.

An operating system 551 includes system programs configured for processing various basic system services and performing hardware-related tasks, such as a framework layer, a core library layer, and a drive layer for implementing various basic services and processing hardware-based tasks.

A network communication module 552 is configured to reach another electronic device through one or more (wired or wireless) network interfaces 520. Exemplary network interfaces 520 include: Bluetooth, wireless compatible authentication (Wi-Fi), a universal serial bus (USB), and the like.

In some embodiments, the audio synthesis apparatus provided in the embodiment of the present disclosure may be implemented by using software. The audio synthesis apparatus provided in this embodiment of the present disclosure may be provided as various software embodiments, including various forms such as an application, software, a software module, a script, or code.

FIG. 2A shows an audio synthesis apparatus 555 stored in a memory 550. The apparatus may be software in a form of a program, a plug-in, or the like, and includes a series of modules, including an invoking module 5551, a generation module 5552, a normalization module 5553, and a waveform decoding module 5554. The modules are logical modules, and therefore may be combined in different modes or further split based on implemented functions. Functions of the modules are described below.

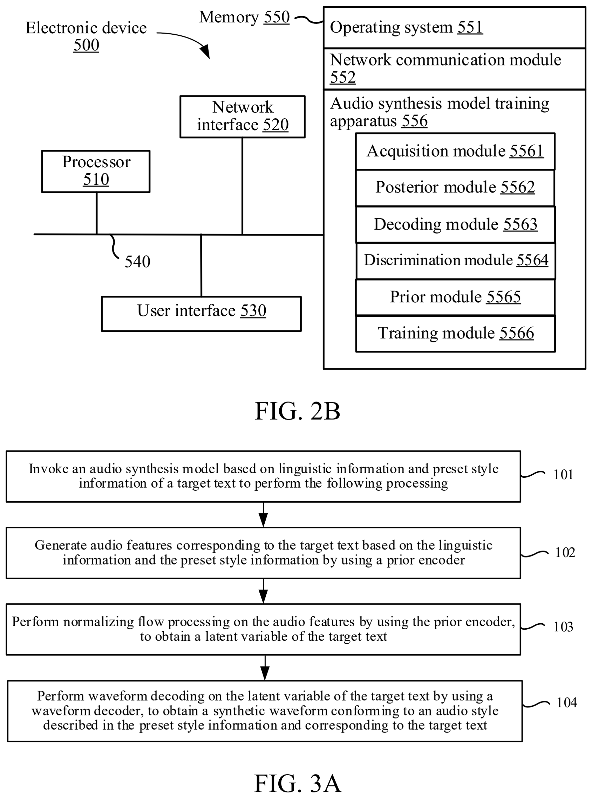

In some embodiments, the audio synthesis model training apparatus provided in this embodiment of the present disclosure may be implemented by software. FIG. 2B shows an audio synthesis model training apparatus 556 stored in a memory 550. The apparatus may be software in a form of a program, a plug-in, or the like, and includes an acquisition module 5561, a posterior module 5562, a decoding module 5563, a discrimination module 5564, a prior module 5565, and a training module 5566. The modules are logical modules, and therefore may be combined in different modes or further split based on implemented functions. Functions of the modules are described below. FIG. 2B shows the same structure as that in FIG. 2A except for the audio synthesis model training apparatus 556.

The audio synthesis apparatus 555 and the audio synthesis model training apparatus 556 may be integrated on one electronic device, that is, the electronic device may implement model training and model application at the same time. The audio synthesis apparatus 555 and the audio synthesis model training apparatus 556 may be respectively integrated on two electronic devices, that is, the two electronic devices respectively implement model training and model application.

The following introduces the audio synthesis method provided in this embodiment of the present disclosure. As described above, the audio synthesis method provided in this embodiment of the present disclosure may be implemented by various types of electronic devices, for example, a terminal, a server, or a combination thereof. Therefore, an entity for performing each operation is not repeatedly described below. FIG. 3A is a flow diagram of an audio synthesis method according to an embodiment of the present disclosure. Description is to be provided with reference to operations shown in FIG. 3A.

In operation 101, an audio synthesis model is invoked based on linguistic information and preset style information for a target text to perform the following processing, the audio synthesis model including a prior encoder and a waveform decoder.

As an example of acquiring the linguistic information and preset style information of the target text, a user enters the linguistic information and preset style information of the target text by using a terminal. The terminal automatically generates an audio generation request, and transmits the audio generation request to a server. The server parses the audio generation request to obtain the linguistic information and preset style information of the target text, invokes an audio synthesis model based on the linguistic information and preset style information of the target text, and performs an audio synthesis method by using the audio synthesis model, to perform audio synthesis on the linguistic information and preset style information of the target text.

The linguistic information of the target text is configured for expressing content of the target text, i.e., content of a synthesized audio. The content information of the target text represents specific information and meaning that the target text intends to convey. The content information is abstract information that does not rely on a language form. The target text is a carrier of the content information. During audio synthesis, the content information needs to be accurately understood and converted, to ensure that meanings of audio output are consistent with those of the target text. For example, content information of the target text "it's a nice day today" is positive evaluation that expresses a weather condition of a day. The linguistic information of the target text includes linguistic features such as language, pronunciation, intonation, and rhythm used in the target text. During audio synthesis, the content information is converted into an audio by using the linguistic features included in the linguistic information. The linguistic features include pronunciation, intonation, rhythm, emotion, and the like. For example, if the target text is also "it's a nice day today", different languages convey different linguistic information. If the target text is outputted through Mandarin, the linguistic information includes a phoneme of "jin tian tian qi hen hao".

The linguistic information may be a linguistic text of the target text, or may be a linguistic vector obtained after words in the linguistic text are mapped to word vectors (also referred to as language embedding). The linguistic vector is a vector form of the linguistic text, and expresses the same content as the linguistic text.

The preset style information is style information set in advance, configured for describing a to-be-synthesized audio style. In the field of audio synthesis, preset style information represents a parameter or feature configured for defining an audio feature of a synthesized audio in an audio synthesis process, and the preset style information reflects a non-semantic feature such as personality, emotion, speed, and intonation of a speaker outputting the synthesized audio, so that an audio synthesis system can generate an audio having a particular emotional color, linguistic style, or speaker feature. The preset style information includes, but is not limited to, an emotional style, a speaker style, a linguistic style, a speed, an intonation, and volume, where the emotional style refers to an emotional color expressed in an audio, such as happy, sad, angry, or surprised. the speaker style refers to a personality feature of a speaker embodied in an audio, such as a thickness of a sound and a speaking rhythm; the linguistic style refers to a linguistic habit of a speaker reflected in an audio, such as use of dialects, jargons, and technical terms; the speed refers to a speed at which a speaker performs expression, and affects smoothness and naturalness of an audio; the intonation refers to a pitch change mode in an audio, and reflects the structure and intention of a sentence; and the volume refers to loudness or sound volume of an audio, and reflects a degree of confidence or emphasis of a speaker. In an actual application, the audio synthesis system imitates specific style information through parameter adjustment, so that a user can synthesize audios in different styles according to requirements. For example, when synthesized speech is broadcast for a piece of news, the speech may be required to have formal, objective, and calm styles. When synthesized speech is read for a storybook, more expressive and vivid styles with emotional colors may be required. Requirements of various application scenarios can be more abundantly and flexibly satisfied by accurately controlling parameters or features included in the style information.

The preset style information may be a to-be-synthesized style text, or may be a style vector obtained after words in the style text are mapped to word vectors (also referred to as style embedding). The style vector is a vector form of the style text, and expresses the same content as the style text. The preset style information is configured for describing an audio style of a synthesized audio after the target text is synthesized into the audio. The audio style may have a style such as happy, sad, angry, excited, annoyed, surprised, suspicious, crafty, stately, enchanting, or taunt.

In operation 102, audio features corresponding to the target text are generated based on the linguistic information and the preset style information by using the prior encoder.

The audio features are configured to represent features related to an audio of a generated audio frame. A process of generating audio features is performing audio frame-level computation on the linguistic information and the preset style information based on the prior encoder, to obtain the audio features corresponding to the target text. In the field of audio synthesis, a prior encoder refers to a model component configured to learn prior knowledge of an audio frame, and aims to capture statistical characteristics or semantic information included in the audio frame, i.e., an audio feature. This embodiment of the present disclosure is not limited to a structure form of the prior encoder. For example, when the prior encoder is a variational autoencoder (VAE), during audio synthesis, the VAE is configured to learn a latent representation of input audio features, to capture statistical distribution of the audio features, so that when a new audio is generated, an audio synthesis model can effectively use statistical information to generate a more natural audio of higher quality.

In an actual application, the prior encoder helps to improve naturalness, smoothness, and expressiveness of audio synthesis. For example, in scenarios such as making a voice assistant, automated dubbing, and virtual character speaking, the prior knowledge of an audio captured by the prior encoder is of great importance to generate an audio that sounds more natural and better conforms to a particular style. The prior encoder may help the model understand and use inherent laws and prior knowledge of an audio signal, to generate a high-quality natural and smooth audio.

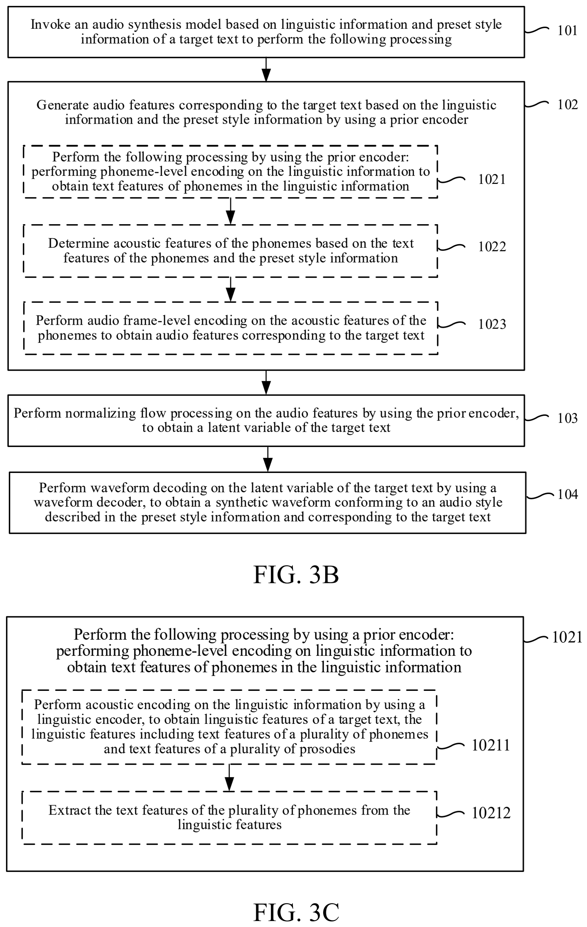

FIG. 3B is a flow diagram of an audio synthesis method according to an embodiment of the present disclosure. FIG. 3B shows that operation 102 in FIG. 3A may be implemented through operation 1021 to operation 1023.

In operation 1021, the following processing is performed by using the prior encoder: performing phoneme-level encoding on the linguistic information to obtain text features of phonemes in the linguistic information.

Herein, the linguistic information of the target text includes a plurality of phonemes. A phoneme is a minimum pronunciation unit obtained by division according to natural attributes of speech, represents a basic audiological unit in an audio signal, and is analyzed according to pronunciation actions in syllables. One action constitutes one phoneme. For example, ma includes two pronunciation actions m and a, that is, ma includes two phonemes. In the field of audio synthesis, phoneme-level encoding is configured for encoding the linguistic information according to phonemes to obtain text features of the phonemes in the linguistic information.

When the linguistic information is a linguistic text, words in the linguistic text may be mapped to word vectors to obtain a linguistic vector. Then, phoneme-level encoding is performed on the linguistic vector to obtain text features (also referred to as phoneme sequence features) of phonemes in the linguistic information. When the linguistic information is a linguistic vector, phoneme-level encoding may be performed on the linguistic vector to obtain text features (also referred to as phoneme sequence features) of phonemes in the linguistic information. The text features of the phonemes are configured for representing semantics of the phonemes.

In this embodiment of the present disclosure, phoneme-level encoding is crucial in audio synthesis. By means of phoneme-level encoding, the audio synthesis model finely controls each pronunciation unit of the audio, thereby generating a more natural and accurate audio. In addition, the phoneme-level processing may further help the audio synthesis model to better capture specific representation forms of phonemes in different languages and dialects, thereby improving diversity and adaptability of audio synthesis.

FIG. 3C is a flow diagram of an audio synthesis method according to an embodiment of the present disclosure. The prior encoder includes a linguistic encoder. FIG. 3C shows that operation 1021 in FIG. 3B may be implemented through operation 10211 to operation 10212.

In operation 10211: acoustic encoding is performed on the linguistic information by using the linguistic encoder, to obtain linguistic features of the target text, the linguistic features including text features of a plurality of phonemes and text features of a plurality of prosodies.

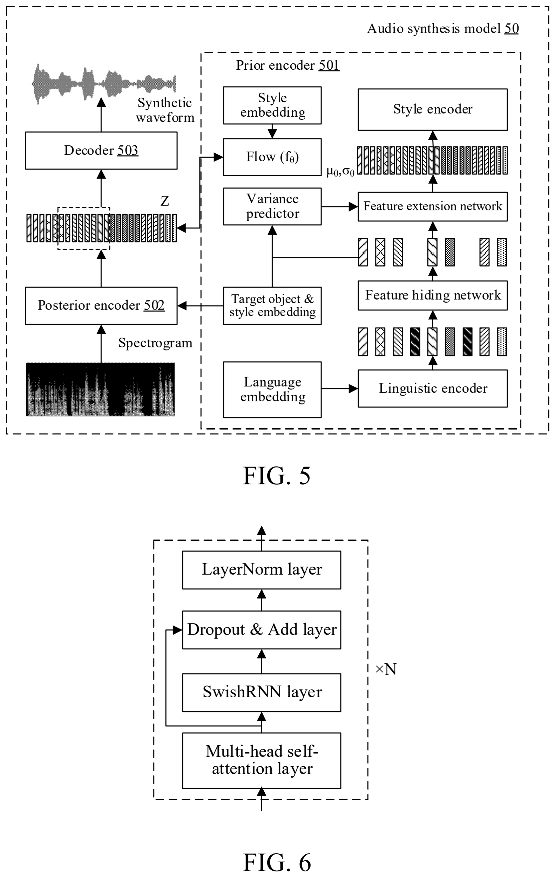

Herein, the linguistic text includes a plurality of phonemes and a plurality of prosodies, and the prosodies are configured for describing a pronunciation mode of the phonemes. The prosody includes at least one of data such as tone, volume, and rhythm. The tone is configured for representing a degree and frequency of changes in the pitch of an audio, for example, the tone includes a rising tone, a falling tone, a flat tone, and the like. The volume is configured for representing strength of audio sounding. The rhythm is configured for representing a pause interval of an audio. For example, the rhythm includes a long pause, a short pause, or no pause. Because the linguistic text includes a plurality of phonemes and a plurality of prosodies, after the linguistic vector is obtained based on the linguistic text, acoustic encoding may be performed on the linguistic vector by using the linguistic encoder in the prior encoder 501 shown in FIG. 5, to obtain linguistic features including a text feature of each phoneme and a text feature of each prosody. The text features of the prosodies are configured for representing semantics of the prosodies. In the field of audio synthesis, acoustic encoding is a process of converting abstract phonetic units such as phonemes or prosodies into acoustic features (i.e., the textual features of phonemes and prosodies). The acoustic features are physical manifestation of an audio signal, determining auditory characteristics of an audio, such as a fundamental frequency (F0), sound intensity, a timbre, and duration. A purpose of the acoustic encoding is to finally convert the text features into a continuous audio waveform by using a vocoder, to generate an actual synthesized audio.

The embodiments of the present disclosure are not limited to the structure, parameters, size, and the like of the linguistic encoder. For example, the linguistic encoder may be an autoencoder, a VAE, or the like. For example, the linguistic encoder may include at least one of a convolutional layer, a pooling layer, an attention layer, a self-attention layer, a multi-head self-attention layer, a batch normalization layer, a layer normalization layer, and the like. For example, the linguistic encoder includes an embedding layer and a convolutional layer. After the linguistic text is inputted into the linguistic encoder, the following acoustic encoding method is performed: mapping each phoneme and each prosody in the linguistic text to a corresponding vector by using the embedding layer of the linguistic encoder, to obtain a linguistic vector, and performing convolution on the linguistic vector by using the convolutional layer, to obtain linguistic features of the target text.

In some embodiments, the linguistic encoder includes a linguistic encoding block, and acoustic encoding may be performed on the linguistic information by using the linguistic encoding block, to extract linguistic features of the target text. Therefore, operation 10211 may be implemented in the following mode: performing acoustic encoding on the linguistic information by using the linguistic encoding block, to obtain the linguistic features of the target text.

In some embodiments, as shown in FIG. 6, the linguistic encoder includes a plurality of cascaded linguistic encoding blocks, and acoustic encoding may be performed on the linguistic information by using the cascaded linguistic encoding blocks, to accurately extract the linguistic features of the target text through a progressive structure. Therefore, operation 10211 may be implemented in the following mode: performing acoustic encoding on the linguistic information by using a first linguistic encoding block among the plurality of cascaded linguistic encoding blocks; outputting an encoding result of the first linguistic encoding block to subsequent cascaded linguistic encoding blocks, and continuing the acoustic encoding and encoding result outputting by using the subsequent cascaded linguistic encoding blocks until outputting the encoding result to the last linguistic encoding block; and using an encoding result outputted by the last linguistic encoding block as the linguistic features of the target text.

Processing procedures of the linguistic encoding blocks are similar, and only processing objects are different. A processing object of the first linguistic encoding block is linguistic information, and processing objects of the other linguistic encoding blocks are outputs of linguistic encoding blocks previous to the other linguistic encoding blocks, where the other linguistic encoding blocks are linguistic encoding blocks other than the first linguistic encoding block among the cascaded linguistic encoding blocks.

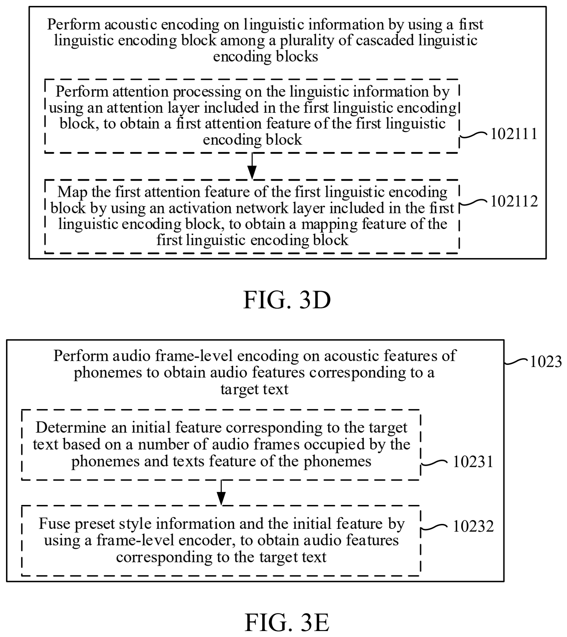

As an example, as shown in FIG. 6, each linguistic encoding block includes an attention layer, an activation network layer, a dropout & add layer, and a layer normalization layer. The following uses the first linguistic encoding block as an example for description. FIG. 3D is a flow diagram of an audio synthesis method according to an embodiment of the present disclosure. FIG. 3D shows that the "performing acoustic encoding on the linguistic information by using a first linguistic encoding block among the plurality of cascaded linguistic encoding blocks" may be implemented by the following operation 102111 to operation 102114.

In operation 102111, attention processing is performed on the linguistic information by using the attention layer included in the first linguistic encoding block, to obtain a first attention feature of the first linguistic encoding block.

In this embodiment of the present disclosure, the linguistic encoder includes a network layer based on an attention mechanism, and the network layer based on an attention mechanism may be an attention layer such as a self-attention layer or a multi-head self-attention layer. When the linguistic information is a linguistic vector, the linguistic vector includes a vector of each phoneme and a vector of each prosody. The first attention feature includes a phonemic attention feature and a prosodic attention feature.

Because a processing mode of a phoneme is similar to that of a prosody, for ease of description, a phoneme or a prosody is referred to as an acoustic element, that is, the linguistic vector includes vectors of a plurality of acoustic elements. For any acoustic element, attention processing may be performed on the vector of the acoustic element based on an attention mechanism to obtain an attention feature of the acoustic element. The attention processing is performing attention computation on an acoustic element in the linguistic information based on the attention mechanism to obtain the first attention feature. This embodiment of the present disclosure is not limited to a form of attention computation, for example, self-attention computation and multi-head self-attention computation.

In operation 102112, the first attention feature of the first linguistic encoding block is mapped by using the activation network layer included in the first linguistic encoding block, to obtain a mapping feature of the first linguistic encoding block.

Herein, the first attention feature includes attention features of a plurality of acoustic elements, the acoustic elements being phonemes or temperaments. The following mapping is performed by using the activation network layer included in the first linguistic encoding block: mapping a related feature of any acoustic element and an attention feature of any acoustic element by using an activation function and a linear function, to obtain a mapping feature of any acoustic element, and using mapping features of all acoustic elements as mapping features of the first linguistic encoding block. When any acoustic element is an initial acoustic element (that is, the first acoustic element), the related feature of the acoustic element is a set feature. When any acoustic element is not an initial acoustic element (i.e., an acoustic element other than the first acoustic element), the related feature of the acoustic element is obtained based on the set feature and an attention feature of each acoustic element located before the acoustic element.

If any acoustic element is a first acoustic element among the plurality of acoustic elements, the configured set feature may be obtained, and the set feature is used as the related feature of the first acoustic element. For example, the configured set feature is a zero matrix, or may be a feature obtained by performing random sampling according to a statistical distribution function, where the statistical distribution function includes, but is not limited to, a normal distribution function, a binomial distribution function, a Bernoulli distribution function, and the like. If any acoustic element is a non-initial acoustic element among the plurality of acoustic elements, the related feature of any acoustic element may be determined based on the set feature and the attention feature of each acoustic element located before the acoustic element. For example, if any acoustic element is a third acoustic element among the plurality of acoustic elements, a related feature of the third acoustic element may be determined based on a related feature of a second acoustic element, a first feature of the first acoustic element, and a first feature of the second acoustic element.

In this embodiment of the present disclosure, the linguistic encoder includes an activation network layer. The related feature of any acoustic element and the attention feature of the acoustic element may be mapped through the activation network layer by using the activation function and the linear function, to obtain a mapping feature of the acoustic element. Activation may be performed according to at least one activation function. A form of the activation function is not limited in this embodiment of the present disclosure. For example, the activation function includes, but is not limited to, a Sigmoid activation function, a Swish activation function (combining a Sigmoid function and a linear function), and a rectified linear unit (ReLU) activation function. Certainly, linear transformation is performed according to at least one linear function.

First, the activation network layer performs linear transformation on the attention feature of each acoustic element twice, as shown in formula (1).

$$\left\{ x_1[i] \right\}_{i=1}^{I} = X W_1, \left\{ x_2[i] \right\}_{i=1}^{I} = X W_2 \tag{1}$$

X represents the attention feature of each acoustic element, and an attention feature of a $t^{th}$ acoustic element is $X_t$. $W_1$ represents a weight item during first linear transformation. $W_2$ represents a weight item during second linear transformation. $W_1$ and $W_2$ are model parameters to be adjusted during training, i.e., learnable parameters. $\left\{ x_1[i] \right\}_{i=1}^{I}$

includes a feature of each acoustic element after the first linear transformation. $\left\{x_2[i]\right\}_{i=1}^{l}$ includes a feature of each acoustic element after the second linear transformation. $l$ represents the number of acoustic elements.

Then, the activation network layer performs first activation based on the related feature of any acoustic element and the feature of any acoustic element after the first linear transformation, to determine a related feature of a next acoustic element, as shown in the following formula (2).

$$c[i] = Swish(c[i-1] - x_1[i]) + x_1[i] \tag{2}$$

where c[$i$] represents a feature obtained after the activation network layer performs first activation based on the related feature c[$i$-1] of an i$^{th}$ acoustic element and the feature $x_1$[$i$] of the i$^{th}$ acoustic element after the first linear transformation, and the feature may be used as a related feature of the (i+1)$^{th}$ acoustic element. Swish() represents performing the Swish activation function element by element. In formula (2), the first activation is Swish activation. In a practical application, the first activation may alternatively be of other types. For example, the first activation is Softmax activation. $Swish(x) = sigmoid(\alpha \cdot x + \beta) \cdot x$, $\alpha$ and $\beta$ being two parameters of the Swish activation function, and x being an independent variable. $Swish(c[i-1]-x_1[i])$ is equivalent to selecting *a* larger value from c[i-1] and $x_1$[i] for pooling operation, so that when $x_1$[i] >> c[i-1], c[i] = $x_1$[i], and when $x_1$[i] << c[i-1], c[i] = c[i-1]. The related feature $\left\{c[i]\right\}_{i=1}^{l}$ of each acoustic element may be determined according to formula (2).

Next, the activation network layer performs second activation based on a feature of any acoustic element after the second linear transformation, and performs linear transformation on a feature obtained after the second activation and a feature obtained after the first activation, to obtain a mapping feature of any acoustic element, as shown in formula (3).

$$H = W_3((C + b_c) \odot \sigma(X_2 + b_\sigma)) + b_3 \tag{3}$$

H represents a mapping feature of each acoustic element, and a mapping feature of a t$^{th}$ acoustic element is ht. $W_3$ represents a weight item during linear transformation. C includes a feature of each acoustic element obtained after the first activation, which is equivalent to $\left\{c[i]\right\}_{i=1}^{l}$. $b_c$ represents a bias item corresponding to C. $\odot$ represents element-by-element multiplication. $\sigma()$ represents a sigmoid gated activation function. In formula (3), the second activation is sigmoid activation. In a practical application, the second activation may alternatively be of other types. For example, the second activation is Softmax activation. $X_2$ includes a feature of each acoustic element obtained after the second activation, which is equivalent to $\left\{x_2[i]\right\}_{i=1}^{l}$. $b_\sigma$ represents a bias item corresponding to $X_2$. $b_3$ represents a bias item during linear transformation.

For example, when the first activation in the activation network layer is Swish activation, and the second activation is sigmoid activation, the activation network layer is also referred to as a Swish recurrent neural network (SwishRNN). The SwishRNN includes a multiplication gated recurrent unit, and uses two matrix multiplication operations and a simple sequential pooling operation. Because a structure of the activation network layer is simple, and mainly includes activation and linear transformation, feature mapping is performed by using the activation network layer, so that an encoding speed can be increased, and generation efficiency of audio features can be improved.

In operation 102113, dropout & add processing is performed on the mapping feature of the first linguistic encoding block and the first attention feature of the first linguistic encoding block by using the dropout & add layer included in the first linguistic encoding block, to obtain a dropout & add feature of the first linguistic encoding block.

Herein, the mapping feature and the attention feature may be concatenated by using the dropout & add layer included in the first linguistic encoding block, to obtain a concatenated feature, and then dropout & add processing is performed on the concatenated feature to obtain the dropout & add feature of the first linguistic encoding block.

The dropout & add processing is configured for performing random dropout and/or add on the mapping feature of the first linguistic encoding block and the first attention feature of the first linguistic encoding block by using the dropout & add layer, to obtain the dropout & add feature of the first linguistic encoding block. The dropout & add processing may alternatively be configured for performing random dropout and/or add, by using the dropout & add layer, on the concatenation feature obtained by concatenating the mapping feature of the first linguistic encoding block and the first attention feature of the first linguistic encoding block, to obtain the dropout & add feature of the first linguistic encoding block. Random dropout is a regularization technology, configured for reducing overfitting when a model is trained. In a dropout process, features (usually according to a particular probability) inputted into the dropout & add layer are randomly dropped out (set to 0) in a process of forward propagation, thereby reducing dependence of the model on a particular training sample, and improving a generalization capability of the model. Add is configured for adding an additional layer to the linguistic encoding block to perform additional processing on the features inputted into the dropout & add layer, to increase model complexity or introduce a specific function. For example, an additional fully-connected layer, a convolutional layer, or another type of layer may be added to the linguistic encoding block, to process a specific feature or execute a specific task.

In this embodiment of the present disclosure, dropout and add are combined, so that in a model training process, dropout is first applied to reduce overfitting, and then weights of some layers are gradually increased in the training process, to introduce more complexity. This method can maintain the generalization capability of the model while allowing the model to learn more complex features at a particular training stage, to achieve a better training effect.

In operation 102114, the dropout & add feature of the first linguistic encoding block is normalized by using the layer normalization layer included in the first linguistic encoding block, to obtain an encoding result of the first linguistic encoding block.

Herein, the dropout & add feature of the first linguistic encoding block is normalized through a LayerNorm function by using the layer normalization (LayerNorm) layer included in the first linguistic encoding block, to obtain the encoding result of the first linguistic encoding block. Certainly, this embodiment of the present disclosure is not limited to the LayerNorm function, and may alternatively be another normalization function, such as min-max normalization and max normalization, where the min-max normalization scales data between 0 and 1, i.e., new data = (raw data - minimum value)/(maximum value - minimum value); and the max normalization scales data between 0 and a fixed value (usually 1). The normalization is configured for performing normalization computation on the dropout & add feature of the first linguistic encoding block, that is, the dropout & add feature of the first linguistic encoding block is converted into a particular range to obtain a normalization result, the normalization result is determined as an encoding result of the first linguistic encoding block, and normalization is performed to make the encoding result more suitable for next processing.

Processing procedures of the linguistic encoding blocks are similar, and only processing objects are different. A processing object of the first linguistic encoding block is linguistic information, and processing objects of the other linguistic encoding blocks are outputs of linguistic encoding blocks previous to the other linguistic encoding blocks, where the other linguistic encoding blocks are linguistic encoding blocks other than the first linguistic encoding block among the cascaded linguistic encoding blocks. The subsequent cascaded linguistic encoding blocks of the first linguistic encoding block are used as an example for description, and the "continuing the acoustic encoding and encoding result outputting by using the subsequent cascaded linguistic encoding blocks" may be implemented in the following mode: performing attention processing on an encoding result outputted by a $(k-1)^{th}$ linguistic encoding block by using the attention layer included in a $k^{th}$ linguistic encoding block, to obtain a first attention feature of the $k^{th}$ linguistic encoding block; mapping the first attention feature of the $k^{th}$ linguistic encoding block by using the activation network layer included in the $k^{th}$ linguistic encoding block, to obtain a mapping feature of the $k^{th}$ linguistic encoding block; performing dropout & add processing on the mapping feature of the $k^{th}$ linguistic encoding block and the first attention feature of the $k^{th}$ linguistic encoding block by using the dropout & add layer included in the $k^{th}$ linguistic encoding block, to obtain a dropout & add feature of the $k^{th}$ linguistic encoding block; and normalizing the dropout & add feature of the $k^{th}$ linguistic encoding block by using the layer normalization layer included in the $k^{th}$ linguistic encoding block, to obtain an encoding result of the $k^{th}$ linguistic encoding block, and outputting the encoding result of the $k^{th}$ linguistic encoding block, k being a sequentially ascending positive integer, $1<k<K$, and K being a number of the linguistic encoding blocks. A processing procedure of the $k^{th}$ linguistic encoding block is similar to that of the first linguistic encoding block, and only processing objects are different.

In conclusion, the linguistic encoder is a phoneme-level model, and an input of the model is a linguistic vector obtained based on conversion of a linguistic text, the linguistic text including a plurality of phonemes and prosodies of different phonemes. The linguistic encoder includes linguistic encoding blocks, and the activation network layer in each linguistic encoding block is SwishRNN. Because the SwishRNN is a recurrent architecture, a time sequence of each phoneme and each prosody in a linguistic sequence can be modeled, thereby improving stability and a representation capability of linguistic features. In addition, attention processing and cyclic processing of the SwishRNN are combined, so that the stability and the representation capability of the linguistic features can be further improved.

In operation 10212, text features of a plurality of phonemes are extracted from the linguistic features.

Herein, because the linguistic features include text features of a plurality of phonemes and text features of a plurality of prosodies, a relative position relationship between each phoneme and each prosody keeps unchanged in a process of performing phoneme encoding on the linguistic information. Therefore, when the text features of the phonemes are needed, the text features of the phonemes may be extracted from the linguistic features based on the positions of the phonemes in the linguistic text.

In some embodiments, in operation 10212, a text feature of each prosody included in the linguistic features may be hidden, to extract text features of phonemes. For example, the text feature of each prosody included in the linguistic features is hidden based on the position of each prosody in the linguistic text. As shown in FIG. 5, the prior encoder 501 further includes a feature hiding network (also referred to as a skip-encoder). The text feature of each prosody included in the linguistic features are hidden by using the feature hiding network, thereby discarding the text features of prosodies and reserving the text features of phonemes, to obtain phoneme sequence features including the text feature of each phoneme. A structure, parameters, a size, and the like of the feature hiding network are not limited in this embodiment of the present disclosure. For example, the feature hiding network includes a dropout layer, and the text features of prosodies are hidden by using the dropout layer.

Following operation 1021, in operation 1022, acoustic features of the phonemes are determined based on the text features of the phonemes and preset style information.

Herein, the prior encoder further includes a variance predictor. If the preset style information is a style text, the style text may be converted into a style vector. The text features of a plurality of phonemes and the style vector are inputted to the variable predictor, and the acoustic features of a plurality of phonemes are determined by using the variable predictor. A structure, parameters, a size, and the like of the variable predictor are not limited in this embodiment of the present disclosure.

The acoustic features of the phonemes are configured for representing a physical property of a sound when a phoneme is read based on an audio style described in the preset style information, and the physical property may reflect sound quality, timbre, and the like of the sound. The acoustic features of the phonemes are not limited in this embodiment of the present disclosure. For example, the acoustic features of the phonemes include at least one of sounding duration of the phoneme, a fundamental frequency of the phoneme, and a fundamental frequency range. The sounding duration of the phoneme may represent the number of audio frames occupied by a phoneme when the phoneme is read. Based on this, the sounding duration of the phoneme may alternatively be referred to as the number of sounding frames of the phoneme. The fundamental frequency of the phoneme is configured for representing a fundamental frequency generated when the phoneme is read, and the fundamental frequency may be a lowest frequency. The fundamental frequency range is configured for representing a fluctuation amplitude of the fundamental frequency. By predicting the fundamental frequency range, a selection range of the fundamental frequency is expanded, and a prosody modeling capability is improved, which is beneficial to generating a high-expressive audio.

Herein, in addition to the text features of the plurality of phonemes and a target style vector, an input of the variable predictor may further include other information. For example, the input of the variable predictor may further include identification information of a target object. The identification information of the target object may be an identification text of the target object, or may be an identification vector of the target object obtained after words in the identification text of the target object are mapped to word vectors (also referred to as identification embedding of the target object). The identification embedding of the target object is in a vector form of the identification text of the target object, and expresses the same content as the identification text of the target object. Different target objects correspond to different identification information, that is, the identification information of the target object is unique.

Therefore, the acoustic features of the phonemes are determined according to the identification vector of the target object, the target style vector, and the text features of the plurality of phonemes, so that the acoustic features of the phonemes can represent a physical property of a sound when a phoneme is read by the target object based on an audio style described in the preset style information, thereby distinguishing sounds of different objects and different styles, which is beneficial to generating a personalized audio, and improving expressiveness of the audio.

Following the above operation 1022, in operation 1023, audio frame-level encoding is performed on the acoustic features of the phonemes to obtain audio features corresponding to the target text.

In this embodiment of the present disclosure, the prior encoder performs audio frame-level encoding on the acoustic features of the phonemes with reference to the text features of the phonemes and the preset style information, to obtain audio features corresponding to the target text. An audio frame may be measured with duration. For example, one audio frame is 10 milliseconds or 25 milliseconds. In the field of audio synthesis, audio frame-level encoding is configured for encoding an acoustic feature by using an audio frame as a basic unit, to obtain audio features corresponding to the target text. The audio features may be divided according to the duration corresponding to the audio frame to obtain audio frame data.

One phoneme occupies at least one audio frame (a basic unit of digital audio processing), an audio feature of the audio frame is configured for to representing an audio style and content of the audio frame (i.e., an audio style and content of a frame), the audio style of the audio frame being an audio style described in the preset style information, and the content of the audio frame being a phoneme.

FIG. 3E is a flow diagram of an audio synthesis method according to an embodiment of the present disclosure. The prior encoder includes a frame-level encoder, the acoustic features of the phonemes include the number of audio frames including the phonemes (i.e., the number of audio frames occupied by the phoneme). FIG. 3E shows that operation 1023 in FIG. 3B may be implemented through operation 10231 to operation 10232.

In operation 10231, an initial feature corresponding to the target text is determined based on the number of audio frames including the phonemes and the text feature of each phoneme.

As an example, the acoustic features of the phonemes include sounding duration of the phoneme, and the sounding duration of the phoneme is also the number of audio frames including the phonemes. As shown in FIG. 5, the prior encoder 501 may further include a feature extension network. For any phoneme, a text feature of the phoneme is extended by using the feature extension network based on the number of audio frames occupied by the phoneme, to obtain an initial feature corresponding to the target text, that is, an initial feature of each audio frame occupied by the phoneme. For example, if the phoneme occupies three audio frames, the text feature of the phoneme may be extended into three parts by using the feature extension network, and a text feature of one phoneme is an initial feature of one audio frame occupied by the phoneme. In this case, an initial feature of an audio frame is configured for describing semantics of the phoneme.

As an example, the acoustic features of the phonemes further include a fundamental frequency and a fundamental frequency range of the phoneme. The text feature of any phoneme, the fundamental frequency of the phoneme, and the fundamental frequency range of the phoneme may be fused by using the feature extension network, to obtain a fusion feature of the phoneme, and the fusion feature of the phoneme is extended based on the number of audio frames occupied by the phoneme, to obtain an initial feature of each audio frame occupied by the phoneme. For example, if the phoneme occupies three audio frames, the text feature of the phoneme, the fundamental frequency of the phoneme, and the fundamental frequency range of the phoneme may be fused by using the feature extension network, to obtain a fusion feature of the phoneme, and the fusion feature of the phoneme is extended into three parts, where the fusion feature of one part of the phoneme is an initial feature of one audio frame occupied by the phoneme. In this case, an initial feature of an audio frame occupied by the phoneme is configured for describing semantics of the phoneme and a physical property of a sound when the phoneme is read.

A structure, a size, parameters, and the like of the feature extension network are not limited in this embodiment of the present disclosure. The feature expansion network can, based on the number of audio frames occupied by the phoneme, extend the phoneme sequence feature $\left\{ \mathrm{h}[i] \right\}_{i=1}^{N'}$ to an initial feature $\left\{ \mathrm{e}[i] \right\}_{i=1}^{T}$ of each audio frame when aligned to the audio frame through replication, where $h[j]$ represents a text feature or fusion feature of an $i^{th}$ phoneme, $e[i]$ represents an initial feature of an $i^{th}$ audio frame, $N'$ represents the number of phonemes, and $T$ represents the number of audio frames.

In operation 10232, the preset style information and the initial feature are fused by using the frame-level encoder, to obtain audio features corresponding to the target text.

Herein, for any audio frame, the preset style information and the initial feature of the audio frame are fused by using the frame-level encoder (also referred to as a style encoder), to obtain an audio feature of the audio frame. Semantics of the audio frame and a physical property of a sound in a case of the audio style described in the preset style information are described by using the audio feature of the audio frame. If the preset style information is a style text, the style text may be converted into a style vector by using the frame-level encoder, and then the style vector and the initial feature of the audio frame are fused. If the preset style information is a style vector, the style vector and the initial feature of the audio frame may be directly fused by using the frame-level encoder.

The fusion is configured for fusing the preset style information and the initial feature of the audio frame to obtain the audio feature of the audio frame, so as to obtain the audio features corresponding to the target text (i.e., a set of audio features of all audio frames). This embodiment of the present disclosure is not limited to a fusion mode of fusion, for example, a weighted summation mode, a concatenation mode, or a mapping mode.

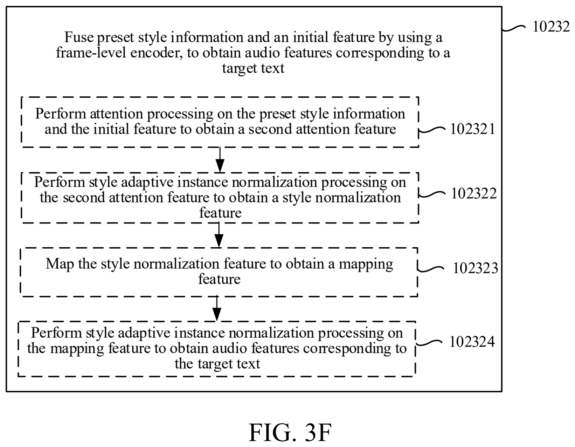

FIG. 3F is a flow diagram of an audio synthesis method according to an embodiment of the present disclosure. FIG. 3F shows that operation 10232 in FIG. 3E may be implemented through operation 102321 to operation 102324.

In operation 102321, attention processing are performed on the preset style information and the initial feature to obtain a second attention feature.

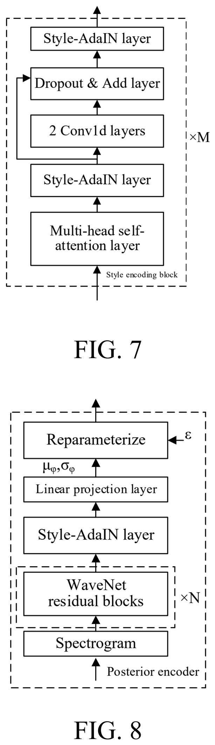

In this embodiment of the present disclosure, as shown in FIG. 7, the frame-level encoder includes a network layer based on an attention mechanism, and the network layer based on an attention mechanism may be an attention layer such as a self-attention layer or a multi-head self-attention layer. For any audio frame, attention processing may be performed on the preset style information and the initial feature of the audio frame based on the attention mechanism to obtain a second attention feature of the audio frame. The second attention feature of the audio frame includes an attention feature of the audio frame in at least one channel. An audio signal corresponds to a frequency range, and the frequency range is divided to obtain a plurality of frequency segments, one frequency segment being one channel. That is, any channel is a frequency segment corresponding to an audio signal, and frequency segments corresponding to different channels may partially overlap or may not overlap. The attention processing is performing attention computation on the preset style information and the initial feature of the audio frame based on an attention mechanism to obtain the second attention feature. This embodiment of the present disclosure is not limited to a form of attention computation, for example, self-attention computation and multi-head self-attention computation.

Following operation 102321, in operation 102322, style adaptive instance normalization processing is performed on the second attention feature to obtain a style normalization feature.

Adaptive instance normalization (AdaIN) is a normalization technology, is a variant of instance normalization, and is configured for improving style transfer performance in the field of audio synthesis. Instance normalization is a method of normalizing an input (i.e., the second attention feature) directly at the level of a single audio instance. A mean and a variance of each input are separately calculated, and then the statistical data are configured for normalizing each channel of the input. Adaptive instance normalization adds an additional operation based on instance normalization, that is, another piece of statistical information is introduced to adjust a normalization process. The style adaptive instance normalization processing is configured for performing style adaptive instance normalization on a style of the second attention feature, to obtain the style normalization feature. The style adaptive instance normalization provides a flexible method to combine content and style information, to generate a high-quality auditory output.

The second attention feature includes an attention feature of the audio frame on at least one channel.

In some embodiments, operation 102322 may be implemented in the following modes: for any channel, a first statistical feature on any channel is determined based on a first feature of the audio frame on the any channel; and for any audio frame, linear transformation is performed on the attention feature of any audio frame on any channel based on the preset style information and the first statistical feature on any channel to obtain a style normalization feature.

As an example, first, for any channel, statistics may be made on an attention feature of each audio frame on the channel to obtain first statistical information of the channel. The first statistical information of the channel includes a mean and a variance. Averaging of the attention feature on the channel is reflected by using the mean of the channel, and a fluctuation of the attention feature on the channel is reflected by using the variance of the channel.

Then, the preset style information may be mapped to a first linear transformation parameter, and a mapping mode is not limited herein. The first linear transformation parameter includes at least one of a weight item and a bias item, the weight item being configured for controlling importance of an attention feature of any audio frame on any channel, and the bias item being configured for controlling a style normalization feature of any audio frame on any channel to be more capable of reflecting an audio style, so that the style normalization feature of any audio frame on any channel is more expressive.

Next, the attention feature of any audio frame on any channel is adjusted based on a mean and a variance of any channel to obtain an adjustment feature of the audio frame on the channel. Then, linear transformation is performed on the adjustment feature of the audio frame on the channel based on at least one of the weight item and the bias item to obtain a style normalization feature of the audio frame on the channel.

In conclusion, as shown in FIG. 7, the frame-level encoder includes a style adaptive instance normalization (Style-AdaIN) layer (also referred to as a style normalization layer). The style normalization layer is configured for performing style adaptive instance normalization processing, and the style normalization layer performs normalization along a sequence. For example, the style normalization layer determines a style normalization feature of any audio frame on any channel (a style normalization feature for short) according to the shown formula (4).

$$Style - AdaIN(x,s) = G(s)\frac{x - \mu(x)}{\sigma(x)} + B(s) \qquad (4)$$

*Style-AdaIN (x,s)* represents a style normalization feature, *x* represents an attention feature of the audio frame on the channel, S represents a style vector, G(s) represents a weight item obtained based on mapping the style vector s, B(s) represents a bias item obtained based on mapping the style vector s, $\mu(x)$ represents a mean of the attention feature on the channel, and $\sigma(x)$ represents a variance of the attention feature on the channel.

In this embodiment of the present disclosure, the frame-level encoder performs feature processing based on the first statistical information of the channel and the first linear transformation parameter, to improve encoding efficiency. Feature processing is performed by using the style normalization layer, to improve feature expressiveness, thereby facilitating style control.

Following operation 102322, in operation 102323, the style normalization feature is mapped to obtain a mapping feature.

Herein, this embodiment of the present disclosure is not limited to the form of mapping. For example, processing such as convolution, random dropout, and random add may be sequentially performed on the style normalization feature, to implement mapping on the style normalization feature. With the mapping being convolution as an example, in this embodiment of the present disclosure, after convolution processing is performed on the style normalization feature, dropout & add processing may be performed on a convolution result by using a dropout & add layer, to obtain a mapping feature.

Following operation 102323, in operation 102324, style adaptive instance normalization processing is performed on the mapping feature to obtain audio features corresponding to the target text.

Herein, the style adaptive instance normalization processing in operation 102324 is similar to that in operation 102322, and only processing objects are different.

In some embodiments, the frame-level encoder includes one style encoding block, and operation 102321 to operation 102324 may be performed by using the one style encoding block, to fuse the preset style information and the initial feature, to obtain audio features corresponding to the target text.

In some embodiments, as shown in FIG. 7, the frame-level encoder includes a plurality of cascaded style encoding blocks, and the preset style information and the initial feature of the audio frame are fused by using the cascaded style encoding blocks, to accurately extract the audio features corresponding to the target text through a progressive structure. Therefore, operation 10232 may be implemented in the following mode: fusing the preset style information and the initial feature of the audio frame by using a first style encoding block among the plurality of cascaded style encoding blocks; outputting a fusion result of the first style encoding block to subsequent cascaded style encoding blocks, and continuing to perform fusion and output the fusion result by using the subsequent cascaded style encoding blocks until outputting the fusion result to the last style encoding block; and using a fusion result outputted by the last style encoding block as the audio features corresponding to the target text.

Processing procedures of the style encoding blocks are similar, and only processing objects are different. A processing object of the first style encoding block is the preset style information and the initial feature of the audio frame, and processing objects of the other style encoding blocks are outputs of style encoding blocks previous to the other style encoding blocks, where the other style encoding blocks are style encoding blocks other than the first style encoding block among the cascaded style encoding blocks.

Following operation 102, in operation 103, normalizing flow processing is performed on the audio features by using the prior encoder, to obtain a latent variable of the target text.

The latent variable includes prior distribution data that implicitly represents a waveform (i.e., a synthetic waveform) of to-be-synthesized audio data, for example, the audio feature conforms to a mean and a variance of prior distribution. The latent variable is configured for not only enabling a waveform generator to synthesize, as much as possible, a synthetic waveform conforming to the audio style described in the preset style information and corresponding to the target text, but also generating data not existing in the synthetic waveform. Normalizing flow processing is configured for converting audio features into continuous manifold representations (i.e., latent variables of the target text) by using the prior encoder, and then the manifold representations are sampled, to generate a new audio waveform. Normalizing flow processing is converting data distribution into standard normal distribution (i.e., Gaussian distribution with a mean of 0 and a variance of 1) through a series of reversible transformations (such as volume change, rotation, and translation). Normalizing flow processing can effectively capture complex distribution of audio data and generate realistic synthesized audios in the field of audio synthesis.

In some embodiments, operation 103 may be implemented in the following mode: performing linear projection on the audio features to obtain statistical features of prior distribution; and performing reversible transformation on the statistical features of prior distribution to obtain a latent variable of the target text.

Herein, the prior encoder further includes a linear projection layer. Linear projection is performed on the audio feature by using the linear projection layer, to obtain the statistical features of prior distribution, the statistical features including a mean and a variance configured for building the prior distribution. The prior encoder further includes a normalizing flow model having an affine coupling layer. Reversible transformation is performed on the statistical features of prior distribution by using the normalizing flow model having an affine coupling layer, to obtain a latent variable of the target text through compounding.

The normalizing flow model focuses on learning a bijection between a target space (for example, a space of prior distribution) and a latent space (for example, a latent variable z conforming to normal distribution). A structure of the normalizing flow model is usually an invertible neural network composed of multiple layers of reversible transformations. This embodiment of the present disclosure is not limited to the structure of the normalizing flow model. The normalizing flow model may use a normalizing flow such as a standard normalizing flow or a fully normalizing flow.

In this embodiment of the present disclosure, a probability distribution is configured for obtaining a feature and distribution of audio data. The normalizing flow technology is a transformation-based method. A series of reversible transformations are performed on a simple probability distribution (i.e., the statistical features of prior distribution), so that the simple probability distribution is gradually converted into a more complex probability distribution (i.e., a latent variable), so as to better describe the feature and distribution of audio data by using the complex probability distribution, so as to synthesize an accurate waveform based on the latent variable.

Following operation 103, in operation 104, waveform decoding is performed on the latent variable of the target text by using the waveform decoder, to obtain a synthetic waveform conforming to the audio style described in the preset style information and corresponding to the target text.

Herein, waveform decoding is directly performed on the latent variable of the target text by using the waveform decoder, to obtain the synthetic waveform conforming to the audio style described in the preset style information and corresponding to the target text. A Mel spectrogram of the target text does not need predicting by using an acoustic model, and an audio waveform is generated by using a vocoder with reference to the Mel spectrogram, thereby avoiding artifacts in the synthesized audio caused by an impact of distribution mismatch between an acoustic feature predicted by using the acoustic model and an acoustic feature configured for training the vocoder, and improving quality and expressiveness of audio synthesis. The synthetic waveform is a visual representation of the synthesized audio, that is, the synthetic waveform is configured for uniquely representing the synthesized audio.

In some embodiments, the waveform decoder is a decoder in a generative adversarial network, and operation 104 may be implemented in the following mode: performing the following processing by using the trained decoder in the generative adversarial network: convolving the latent variable of the target text to obtain a convolution result; performing anti-aliased multi-periodicity synthesis processing on the convolution result to obtain a semantic feature; and performing non-linear mapping on the semantic feature to obtain a synthetic waveform conforming to the audio style described in the preset style information and corresponding to the target text.

Herein, the waveform decoder may be a big visual generative adversarial network (BigVGAN) decoder, i.e., a decoder in the BigVGAN, where the BigVGAN is a variant of a variational generative adversarial network. The BigVGAN combines characteristics of a generative adversarial network (GAN) and a variational autoencoder (VAE), to generate a high-quality audio by means of adversarial training and adversarial reasoning, and the BigVGAN includes a decoder and a discriminator. The BigVGAN decoder introduces periodic nonlinear and anti-aliased representations, to bring required induction bias to waveform synthesis, so as to improve audio quality. The semantic feature can be extracted from the audio data by using the BigVGAN decoder, the semantic feature representing a feature related to an audio style described in the preset style information and the target text. This embodiment of the present disclosure is not limited to the structure of the waveform decoder. The anti-aliased multi-periodicity synthesis processing includes anti-aliased multi-periodicity synthesis operation.

The anti-aliased multi-periodicity synthesis processing may be performed at a time, i.e., the anti-aliased multi-periodicity synthesis processing is performed on the convolution result once to obtain the semantic feature; the anti-aliased multi-periodicity synthesis processing may alternatively be cascaded processing, i.e., cascaded anti-aliased multi-periodicity synthesis processing is performed on the convolution result to obtain the semantic feature; and the semantic feature is progressively extracted by the cascaded anti-aliased multi-periodicity synthesis processing.

In some embodiments, the performing anti-aliased multi-periodicity synthesis processing on the convolution result to obtain a semantic feature may be implemented in the following mode: performing transposed convolution on the convolution result to obtain a transposed convolution feature; and performing anti-aliased multi-periodicity synthesis operation on the transposed convolution feature to obtain the semantic feature.

In the field of audio synthesis, the anti-aliased multi-periodicity synthesis operation is configured for performing multi-period sampling and filtering processing on inputted data (for example, a transposed convolution feature), to reduce or eliminate an aliasing effect caused by a digital audio sampling rate limitation and improve quality of the synthesized audio. For example, the anti-aliased multi-periodicity synthesis operation includes the following key operations: 1. multi-period sampling, first sample the inputted data for multiple times within one period to obtain finer-grained data, so that internal details of the waveform can be captured, thereby reducing distortion in a subsequent digital to analog conversion process; 2. filtering processing: filter data obtained through multi-period sampling, for example, a frequency component higher than a half of a sampling rate (i.e., a part above a folding frequency) is filtered out, to prevent aliasing of the high-frequency components during digital to analog conversion; and 3. anti-aliased processing: further smooth a waveform edge of filtered data by using an anti-aliased technology, to reduce a step-like edge introduced due to a sampling rate limitation, that is, an aliasing effect.

According to this embodiment of the present disclosure, the anti-aliased multi-periodicity synthesis operation can generate a smoother and natural waveform, thereby reducing distortion and noise generated due to a sampling rate limitation, and improving overall quality of the synthesized audio.

For example, one-dimensional transposed convolution (TransposedConv1d) is first performed on the convolution result, and then the anti-aliased multi- periodicity (AMP) synthesis operation is performed on the one-dimensional transposed convolution feature to obtain the semantic feature. When the anti-aliasing multi-periodicity synthesis processing is cascaded processing, each anti-aliased multi-periodicity synthesis processing is similar, and only processing objects are different. A processing object of first anti-aliased multi-periodicity synthesis processing is a convolution result, and processing objects of the other anti-aliased multi-periodicity synthesis processing are outputs of anti-aliased multi-periodicity synthesis processing previous to the other anti-aliased multi-periodicity synthesis processing, where the other anti-aliased multi-periodicity synthesis processing is anti-aliased multi-periodicity synthesis processing other than the first anti-aliased multi-periodicity synthesis processing among the cascaded anti-aliased multi-periodicity synthesis processing.

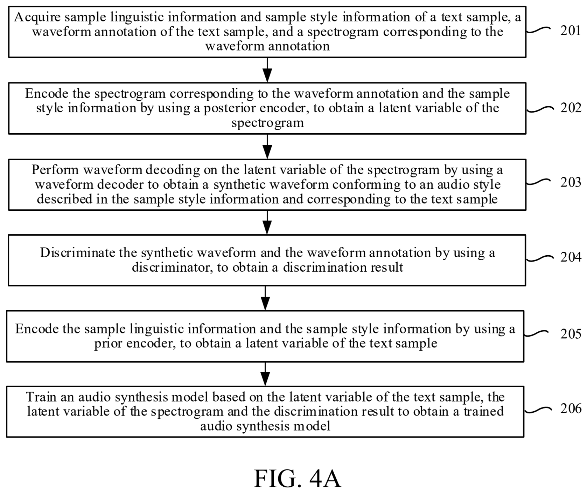

An audio synthesis model training method is described below. As described above, the audio synthesis model training method provided in this embodiment of the present disclosure may be implemented by various types of electronic devices, for example, a terminal, a server, or a combination thereof. Therefore, an entity for performing each operation is not repeatedly described below. FIG. 4A is a flow diagram of an audio synthesis model training method according to an embodiment of the present disclosure, which is described with reference to operations shown in FIG. 4A, where the audio synthesis model includes a prior encoder, a posterior encoder, a waveform decoder, and a discriminator.

In operation 201, sample linguistic information and sample style information for a text sample, a waveform annotation of the text sample, and a spectrogram corresponding to the waveform annotation are acquired;

The text sample is a training sample configured for training the audio synthesis model, and the sample linguistic information of the text sample is configured for expressing content of the text sample, i.e., content of a synthesized audio.

The sample linguistic information may be a linguistic text of the text sample, or may be a linguistic vector obtained after words in the linguistic text are mapped to word vectors (also referred to as linguistic embedding). The linguistic vector is a vector form of the linguistic text, and expresses the same content as the linguistic text.

The sample style information is configured for describe a style of the synthesized audio. The sample style information may be a synthesized style text, or may be a style vector obtained after words in the style text are mapped to word vectors (also referred to as text style embedding). The style vector is a vector form of the style text, and expresses the same content as the style text.

A waveform annotation of the text sample represents a real waveform corresponding to a real audio corresponding to the text sample. A spectrogram corresponding to the waveform annotation is a spectrogram obtained by performing signal processing on the waveform annotation.

Following operation 201, in operation 202, the spectrogram corresponding to the waveform annotation and the sample style information are encoded by using the posterior encoder, to obtain a latent variable of the spectrogram.

The latent variable of the spectrogram includes posterior distribution data that implicitly represents a waveform (i.e., a synthetic waveform) of to-be-synthesized audio data, for example, the spectrogram conforms to a mean and a variance of posterior distribution.

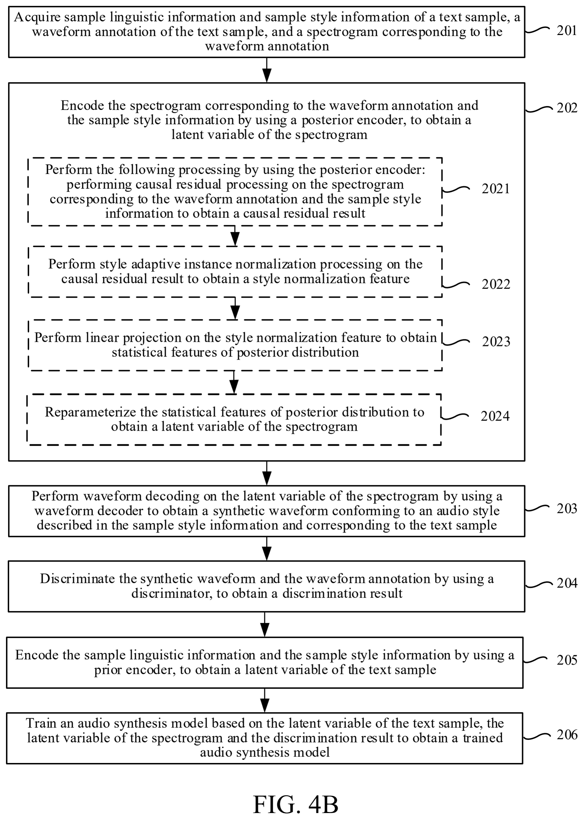

FIG. 4A is a flow diagram of an audio synthesis model training method according to an embodiment of the present disclosure. FIG. 4B shows that operation 202 in FIG. 4A may be implemented through operation 2021 to operation 2023.

In operation 2021, the following processing is performed by using the posterior encoder: performing causal residual processing on the spectrogram corresponding to the waveform annotation and the sample style information to obtain a causal residual result.

The causal residual processing is configured for calculating a causal residual on the spectrogram corresponding to the waveform annotation and the sample style information. Herein, the posterior encoder in this embodiment of the present disclosure includes a wavenet residual block, and the sample style information is added to the wavenet residual block as a global condition. Causal residual processing is performed on the spectrogram corresponding to the waveform annotation and the sample style information by using the wavenet residual block, to obtain the causal residual result, so as to supplement information (for example, a phase) missing from rebuilding audio data from a Mel spectrogram. The audio data rebuilt by using the wavenet residual block is more natural than a sound generated by using a conventional vocoder or algorithm.

In some embodiments, operation 2021 may be implemented in the following mode: performing convolution on the spectrogram corresponding to the waveform annotation to obtain a convolution result; performing gated activation unit-based residual processing on the convolution result and the sample style information for multiple times to obtain multiple residual results, where one gated activation unit-based residual processing corresponds to one residual result; and performing skip-connection processing on the multiple residual results to obtain a causal residual result.

For example, first, causal convolution is performed on the spectrogram corresponding to the waveform annotation to obtain a convolution result. This embodiment of the present disclosure is not limited to the causal convolution, and may alternatively be dilated convolution.

Then, gated activation unit-based residual processing are performed on the convolution result and the sample style information for multiple times to obtain multiple residual results, where gated activation unit-based residual processing may be implemented in the following mode: performing dilated convolution processing on the convolution result to obtain an dilated convolution result; adding the sample style information to a gated activation unit as a global condition, and performing activation processing on the dilated convolution result by using the gated activation unit, to obtain an activation result; and performing residual processing on the activation result and the convolution result to obtain a residual result. The activation processing is shown in formula (5).

$$z = \tanh(W_{f,k} * x + V_{f,k}^{T} y) \odot \sigma(W_{g,k} * x + V_{g,k}^{T} y) \tag{5}$$

$W_{f,k}$, $W_{g,k}$, $V_{f,k}^{T}$, and $V_{g,k}^{T}$ represent learnable parameters of $k^{th}$ gated activation unit-based residual processing. tanh() represents a Tanh activation function, and $\sigma()$ represents a sigmoid gated activation function. x represents an input of a gated activation unit, i.e., a dilated convolution result. z represents an output of a gated activation unit, i.e., an activation result. y represents sample style information.

Next, skip-connection processing is performed on the multiple residual results to obtain a causal residual result. Certainly, after skip-connection processing is performed on the multiple residual results, a skip-connection result is mapped to obtain the causal residual result. For example, after the skip-connection result is processed by using the ReLU function, one-dimensional ordinary convolution is performed, and finally, non-linear mapping is performed by using the softmax function, to obtain the causal residual result.

Following operation 2021, in operation 2022, style adaptive instance normalization processing is performed on the causal residual result to obtain a style normalization feature.

Herein, the style adaptive instance normalization processing in operation 2022 is similar to that in operation 102322, and only processing objects are different. Style adaptive instance normalization processing is performed on the causal residual result, to better distinguish different acoustic features from multiple styles and further improve the effectiveness of audio synthesis.

Following operation 2022, in operation 2023, linear projection is performed on the style normalization feature to obtain statistical features of posterior distribution.

Herein, the linear projection in operation 2023 is similar to that in operation 103, and only processing objects are different. The posterior encoder further includes a linear projection layer. Linear projection is performed on the style normalization feature by using the linear projection layer, to obtain the statistical features of posterior distribution, the statistical features including a mean and a variance configured for building the posterior distribution.

Following operation 2023, in operation 2024, the statistical features of posterior distribution are reparameterized to obtain a latent variable of the spectrogram.

The latent variable is configured for not only enabling a waveform generator to synthesize, as much as possible, a synthetic waveform conforming to the audio style described in the sample style information and corresponding to the text sample, but also generating data not existing in the synthetic waveform.

Herein, operation 2024 may be implemented in the following mode: reparameterizing the statistical features of posterior distribution by using a reparameterization function with reference to random noise $\varepsilon$, to obtain the latent variable of the spectrogram. For example, if the statistical features of posterior distribution include a variance $\sigma$ and a mean $\mu$, the reparameterization function is $z = \mu + \sigma \odot \varepsilon$, $\varepsilon$ represents random noise, and $z$ represents a latent variable. This embodiment of the present disclosure is not limited to a form of the reparameterization function.

Following operation 202, in operation 203, waveform decoding is performed on the latent variable of the spectrogram by using the waveform decoder, to obtain a synthetic waveform conforming to the audio style described in the sample style information and corresponding to the text sample.

Herein, the waveform decoding in operation 203 is similar to that in operation 104, and only processing objects are different.

Following operation 203, in operation 204, the synthetic waveform and the waveform annotation are discriminated by using the discriminator, to obtain a discrimination result.

Herein, the discriminator is a discriminator in a generative adversarial network. The discriminator may be a BigVGAN discriminator (i.e., a discriminator in the BigVGAN). The synthetic waveform and the waveform annotation are discriminated by using the discriminator, to obtain the discrimination result, where the discrimination result includes a discrimination result of the synthetic waveform and a discrimination result of the waveform annotation, and the discrimination result is true or false. The discrimination is configured for discriminating the synthetic waveform and the waveform annotation, to obtain the discrimination result of the synthetic waveform and the discrimination result of the waveform annotation.

The discriminator in this embodiment of the present disclosure may include a plurality of multi-resolution discriminators (MRDs), i.e., discriminator sub-modules. Multi-resolution discrimination is performed on the synthetic waveform and the waveform annotation by using the plurality of discriminator sub-modules, to obtain discrimination results under different resolutions.

Following operation 204, in operation 205, the sample linguistic information and the sample style information are encoded by using the prior encoder, to obtain a latent variable of the text sample.

Herein, operation 205 may be implemented in the following mode: generating audio features corresponding to the text sample based on the sample linguistic information and the sample style information by using the prior encoder; and performing normalizing flow processing on the audio features corresponding to the text sample by using the prior encoder, to obtain a latent variable of the text sample. The generating process in operation 205 is similar to that in operation 102, and only processing objects are different. The normalizing flow processing in operation 205 is similar to that in operation 103, and only processing objects are different.

Following operation 205, in operation 206, the audio synthesis model is trained based on the latent variable of the text sample, the latent variable of the spectrogram and the discrimination result to obtain a trained audio synthesis model, where the prior encoder and the waveform decoder included in the trained audio synthesis model are configured to perform the audio synthesis method.

Herein, a loss function of the audio synthesis model is built based on the latent variable of the text sample, the latent variable of the spectrogram and the discrimination result, and parameters of the audio synthesis model are updated based on the loss function, to train the audio synthesis model, so as to obtain a trained audio synthesis model.

A loss value is configured for representing a difference between an output result and an actual result (or referred to as an annotation result) of the model (i.e., the audio synthesis model in this embodiment of the present disclosure). Training of the model mainly involves two processes: forward propagation and back propagation. With a neural network model including an input layer, a hidden layer, and an output layer as an example, forward propagation processing means sequentially performing processing by using the input layer, the hidden layer, and the output layer, to finally obtain an output result; and back propagation processing refers to sequentially propagating a computed loss value to the output layer, the hidden layer, and the input layer, so as to update a weight parameter in each layer.

In some embodiments, a waveform decoder and a discriminator included in the audio synthesis model may be respectively trained, and operation 206 may be implemented in the following mode: training the waveform decoder and the discriminator included in the audio synthesis model based on the discrimination result; and training a prior encoder included in the audio synthesis model based on the latent variable of the text sample and the latent variable of the spectrogram.

For example, training the waveform decoder based on the discrimination result of the waveform annotation, so that the waveform decoder generates a false synthetic waveform based on a latent variable of a real text sample; and training the discriminator based on a discrimination result of the false synthetic waveform and a discrimination result of a real waveform annotation, so that the discriminator distinguishes between the real waveform annotation and the false synthetic waveform. When the waveform decoder is trained, parameters of a fixed discriminator remain unchanged. When the discriminator is trained, parameters of a fixed generation model remain unchanged. At an optimization stage of the discriminator, the discriminator is made to distinguish, as far as possible, between a real waveform from a false waveform generated by the waveform decoder. At an optimization stage of the waveform decoder, the waveform decoder is made to obtain, as far as possible, waveforms that may confuse the discriminator. By means of mutual game between the discriminator and the waveform decoder, the waveform decoder can generate waveforms that are as real as possible.

For example, a loss function of the prior encoder is built based on the latent variable of the text sample and the latent variable of the spectrogram, and parameters of the prior encoder are updated based on the loss function of the prior encoder, to train the prior encoder.

An exemplary application of this embodiment of the present disclosure in an actual application scene will be described below.

Audio synthesis modes in related technologies are relatively rough. Generally, a Mel spectrogram diagram of text data is first predicted by using an acoustic model, and then an audio waveform is generated by using a vocoder with reference to the Mel spectrogram, to synthesize the Mel spectrogram corresponding to the text data, thereby obtaining audio data corresponding to the text data. Due to the impact of distribution mismatch between an acoustic feature predicted by using the acoustic model and an acoustic feature configured for training the vocoder, this synthesis method is prone to causing artifacts in the synthesized audio, and cannot achieve precise audio synthesis, thereby affecting the user experience of normal audio synthesis.

In view of this, an embodiment of the present disclosure provides an audio synthesis model based on a time sequence attention neural network for achieving high expressiveness and high fidelity, and an audio synthesis method is implemented by using the audio synthesis model. In the provided audio synthesis model, multiple layers of stacked SwishRNN-based transform blocks are used as the foregoing linguistic encoder, and a style adaptive instance normalization (SAIN) layer is also developed into a frame-level encoder, to improve an expression capability of modeling. In addition, variational autoencoders (VAEs) of normalizing flow and a BigVGAN decoder (also referred to as a waveform decoder) having an adversarial training strategy are added to the audio synthesis model, thereby further improving quality and expressiveness of audio synthesis.

The following describes the audio synthesis method provided by this embodiment of the present disclosure with reference to the audio synthesis model shown in FIG. 5.

As shown in FIG. 5, an audio synthesis model 50 provided in this embodiment of the present disclosure may be considered as a VAE added with a normalizing flow. The audio synthesis model includes a state-skip prior encoder (a prior encoder for short), a SAIN-based posterior encoder 502, a BigVGAN decoder 503 (a decoder for short), and a discriminator located after the BigVGAN decoder. The prior encoder is conditional on linguistic information, and the posterior encoder is conditional on an acoustic feature (for example, a Mel spectrogram). The prior encoder further includes a variance predictor, and the variance predictor may predict sounding duration, a fundamental frequency, a fundamental frequency range, and the like of each phoneme. The SAIN-based posterior encoder and the discriminator are only configured to train the audio synthesis model.

The following describes the prior encoder, the posterior encoder, and the BigVGAN decoder in the audio synthesis model.

1) Prior encoder

In this embodiment of the present disclosure, the prior encoder uses a two-level hierarchical skip-encoder to significantly reduce pronunciation errors and improve speech quality and an expression capability. The two-level hierarchical skip-encoder includes a phoneme-level linguistic encoder having a stack of SwishRNN-based transform blocks (as shown in FIG. 6), and a frame-level encoder having an SAIN layer (as shown in FIG. 7). The prior encoder further includes a linear projection layer after the skip-encoder, and statistical features (including a mean and a variance) of prior distribution are built by using the linear projection layer for a sequence c outputted by a SAIN-based frame-level encoder. The prior encoder further has a normalizing flow $f_\theta$ of a stack of affine coupling layers, configured for improving flexibility of prior distribution. The normal prior distribution of the normalizing flow $f_\theta$ is compounded by a set of reversible transformations, to obtain a probability distribution as shown in formula (6):

$$p_\theta(z|c) = N\left(f_\theta(z); \mu_\theta(c), \sigma_\theta(c)\right) \left| det \frac{\partial f_\theta(z)}{\partial z} \right| \tag{6}$$

c represents an output of a SAIN-based frame-level encoder. Z represents a latent variable of prior distribution. $f_\theta$ represents a normalizing flow function, $\mu_\theta$ represents a mean of prior distribution, and $\sigma_\theta$ represents a variance of prior distribution.

2) SAIN-based posterior encoder

As shown in FIG. 8, for a posterior encoder that predicts posterior distribution of a latent variable z when an acoustic feature condition x is given, a wavenet residual block composed of a gated activation unit and dilated convolutions of skip connection is used. Style embedding of a style label is added to the wavenet residual block as a global condition. To better distinguish different acoustic features from multiple styles, a style-AdaIN layer and a linear projection layer are further added after the wavenet residual block, to generate a mean and a variance of posterior distribution. Then a KL divergence is computed to optimize the audio synthesis model, where the computing formula of the KL divergence $L_{KL}$ is shown in formula (7).

$$L_{KL} = \log q_\phi(z|x) - \log p_\theta(z|c) \tag{7}$$

$z \sim q_\phi(z|x) = N(z; \mu_\phi(x), \sigma_\phi(x))$, and x represents a high-resolution linear-scale spectrogram (referred to as a spectrogram) of a target speech. z in log $q_\phi(z|x)$ represents a latent variable outputted by the SAIN-based posterior encoder, and z in log $p_\theta(z|c)$ represents a latent variable outputted by the normalizing flow $f_\theta$.

3) BigVGAN decoder

A BigVGAN decoder is adopted as a waveform decoder, conditional on a potential latent variable z in the VAE. The BigVGAN decoder includes a plurality of transposed convolution blocks and an anti-aliased multi-periodicity (AMP) synthesis module. A transposed convolution operation is implemented by using the transposed convolution blocks, and an anti-aliased multi-periodicity synthesis operation is implemented by using the anti-aliased multi-periodicity synthesis module. The AMP modules add features of a plurality of residual blocks of different channel periods before one-dimensional dilated convolution. The one-dimensional dilated convolution uses a Snake function to provide a periodic inductive bias and uses a low pass filter to implement an anti-aliased purpose.

According to a BigVGAN discriminator architecture, a multi-resolution discriminator (MRD) is used in a time-frequency domain. The multi-resolution discriminator operates on a plurality of spectrograms with different STFT resolutions. The multi-resolution discriminator is a multi- periodicity discriminator. A one-dimensional signal in the multi-period discriminator is reshaped into two-dimensional representations with varying heights and widths, to respectively capture a plurality of periodic structures by means of two-dimensional convolution. A loss function $L_G$ of the BigVGAN decoder (G) and a loss function $L_D$ of the discriminator are respectively as follows, the BigVGAN decoder and the discriminator are trained by using the loss function $L_G$ and the loss function $L_D$ of the discriminator, the loss function $L_G$ is shown in formula (8), and the loss function $L_D$ of the discriminator is shown in formula (9):

$$L_G = \sum_{k=1}^{K} \left[ L_{adv}(G; D_k) + \lambda_{fm} L_{fm}(G; D_k) \right] + \lambda_{mel} L_{mel}(G) \tag{8}$$

$$L_D = \sum_{k=1}^{K} \left[ L_{adv}(D_k; G) \right] \tag{9}$$

$D_k$ represents a $k^{th}$ MRD discriminator. $L_{adv}$ uses least squares generative adversarial loss, $L_{fm}$ represents feature matching loss (a $\ell 1$ distance of an intermediate feature from the discriminator), and $L_{mel}(G)$ represents spectral $\ell 1$

regression loss between a Mel spectrogram of a synthetic waveform and a corresponding waveform annotation.

To better evaluate the performance of the audio synthesis model (this model for short) provided in this embodiment of the present disclosure and other TTS models, the following experimental setting is adopted: a high-expressive Chinese corpus including 11.8 hours is used as a training data set, the corpus including 12 styles of speech made by 7 different speakers. The TTS models include DurIAN, FastSpeech2, DiffSpeech, VITS and DurIAN-E. Except the VITS and the audio synthesis model provided in this embodiment of the present disclosure, all models share an additional BigVGAN vocoder, the BigVGAN vocoder being separately trained under the condition of a real Mel spectrogram, to better compare performance of different acoustic models.

Different TTS models are objectively evaluated through a target test. In the target test, for ease of comparison, all TTS models maintain the same duration as natural speech (i.e., real speech). Table 1 provides root mean square errors (RMSEs) and correlation coefficients of F0 values of different TTS models on a linear scale between natural speech and synthesized speech, and the models are divided into three groups based on whether the models generate a waveform by using a denoiser or directly. Acoustic features for comparison are extracted from the synthesized waveform.

Table 1 Distortion between acoustic features of natural speech and synthesized speech from different TTS models, V/UV representing a frame-level voiced/unvoiced error, BAP and Corr. respectively representing a BAP prediction error and a correlation coefficient, MCD representing Mel-cepstral distortion, and BAP representing band aperiodic distortion

| TTS model | MCD (dB) | BAP (dB) | F0 RMSE (Hz) | F0 Corr. | V/UV (%) |
|---|---|---|---|---|---|
| GT (vocoder) | 2.898 | 2.708 | 15.765 | 0.975 | 3.863 |
| FastSpeech2 | 6.138 | 4.274 | 48.921 | 0.758 | 7.603 |
| DurIAN | 6.036 | 3.851 | 47.908 | 0.769 | 7.334 |
| DiffSpeech | 6.711 | 3.361 | 50.249 | 0.749 | 8.205 |
| DurIAN-E | 6.686 | 3.354 | 48.469 | 0.765 | 7.440 |
| VITS | 6.691 | 3.285 | 49.420 | 0.751 | 8.235 |
| This model | 6.500 | 3.281 | 47.899 | 0.773 | 7.550 |

The results shown in Table 1 show that most accurate F0 and BAP values can be obtained for speech synthesized by using this model.

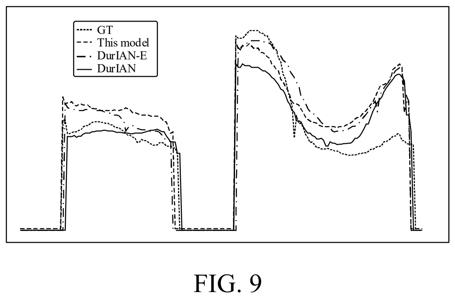

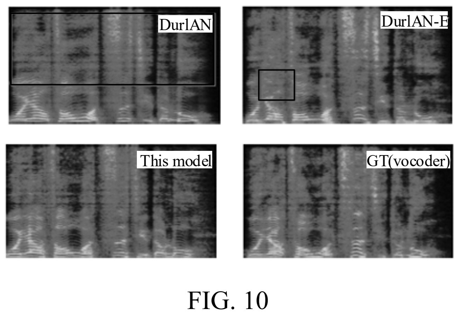

As pitch contour of different DurIAN models shown in FIG. 9 as an example, an F0 curve of DurIAN is smoother and has no fluctuation compared with DurIAN-E and this model. In a TTS model using a DPPM-based denoiser and directly generating a waveform, an MCD value of this model is also the minimum. Among the three groups of systems, spectral distortion in one group corresponding to DurIAN and FastSpeech2 is the smallest mainly because an acoustic model in this group of models directly optimizes mean square error (MSE) loss of a spectrum feature. Although DurIAN and FastSpeech2 can achieve a minimum MCD, an oversmoothing problem shown in FIG. 10 seriously reduces speech quality. As shown in FIG. 10, the performance of this model is better than that of DurIAN-E, and a clearer harmonic structure and more realistic spectral details can be generated.

For subjective MOS tests, 20 test speeches synthesized by different models are randomly selected from a test set, and are evaluated by 10 experienced listeners to obtain MOS results shown in Table 2.

Table 2 MOS values of different models with 95% confidence intervals

| Model | GT | GT (vocoder) | FastSpeech2 | DurIAN | DiffSpeech | VITS | DurIAN-E | This model |
|---|---|---|---|---|---|---|---|---|
| MOS | 4.45±0.16 | 4.23±0.17 | 3.62±0.17 | 3.73±0.15 | 3.78±0.19 | 3.80±0.23 | 3.86±0.14 | 4.00±0.18 |

As shown in Table 2, compared with other TTS models, this model can obtain the best MOS score, indicating that the capacity of the proposed model is sufficient. The VITS model may directly generate a waveform in an end-to-end mode, which goes beyond a multi-stage model DiffSpeech. In DiffSpeech, a predicted Mel spectrogram is first augmented by a DPPM-based denoiser, and then converted into a waveform by a vocoder. Although DurIAN-E is also such a multi-stage model, because a two-level hierarchical skip-encoder architecture is adopted, DurIAN-E obtains a better MOS result than VITS. This model combines advantages of the models, including an end-to-end waveform generation method and other complex structures in VITS. For example, SwishRNN and SAIN layers are used as prior encoders and precoders, so that more expressive speech with high fidelity can be synthesized.

In conclusion, in the audio synthesis model provided in this embodiment of the present disclosure, the two-level hierarchical skip-encoder and the SAIN-based posterior encoder are used, to achieve more natural prosodies and better expressiveness. To further improve speech quality, a BigVGAN decoder based on a variable latent variable and style embedding is also adopted. Experimental results of an objective test and a subjective test prove that compared with other TTS models, the audio synthesis model provided in this embodiment of the present disclosure can obtain better performance.

So far, the audio synthesis method according to this embodiment of the present disclosure has been described with reference to exemplary application and implementation of the electronic device according to this embodiment of the present disclosure. How modules in an audio synthesis device 555 according to an embodiment of the present disclosure cooperate to implement an audio synthesis solution is continuously described below.

An invoking module 5551 is configured to invoke an audio synthesis model based on linguistic information and preset style information for a target text to perform the following processing, the audio synthesis model including a prior encoder and a waveform decoder: a generation module 5552 is configured to generate audio features corresponding to the target text based on the linguistic information and the preset style information by using the prior encoder; a normalization module 5553 is configured to perform normalizing flow processing on the audio features by using the prior encoder, to obtain a latent variable of the target text; and a waveform decoding module 5554 is configured to perform waveform decoding on the latent variable of the target text by using the waveform decoder, to obtain a synthetic waveform conforming to the audio style described in the preset style information and corresponding to the target text.

In some embodiments, the normalization module 5553 is further configured to perform linear projection on the audio features to obtain statistical features of prior distribution; and perform reversible transformation on the statistical features of prior distribution to obtain a latent variable of the target text.

In some embodiments, the waveform decoder is a decoder in a generative adversarial network; the waveform decoding module 5554 is further configured to perform the following processing by using the trained decoder in the generative adversarial network: convolving the latent variable of the target text to obtain a convolution result; performing anti-aliased multi-periodicity synthesis processing on the convolution result to obtain a semantic feature; and performing non-linear mapping on the semantic feature to obtain a synthetic waveform conforming to the audio style described in the preset style information and corresponding to the target text.

In some embodiments, the waveform decoding module 5554 is further configured to perform transposed convolution on the convolution result to obtain a transposed convolution feature; and perform anti-aliased multi-periodicity synthesis operation on the transposed convolution feature to obtain the semantic feature.

In some embodiments, the generation module 5552 is further configured to perform the following processing by using the prior encoder: performing phoneme-level encoding on the linguistic information to obtain text features of phonemes in the linguistic information; determining acoustic features of the phonemes based on the text features of the phonemes and the preset style information; and performing audio frame-level encoding on the acoustic features of the phonemes to obtain audio features corresponding to the target text.

In some embodiments, the prior encoder includes a linguistic encoder; the generation module 5552 is further configured to perform acoustic encoding on the linguistic information by using the linguistic encoder, to obtain linguistic features of the target text, the linguistic features including text features of a plurality of phonemes and text features of a plurality of prosodies; and extract the text features of the plurality of phonemes from the linguistic features.

In some embodiments, the linguistic encoder includes a plurality of cascaded linguistic encoding blocks. The generation module 5552 is further configured to perform acoustic encoding on the linguistic information by using a first linguistic encoding block among the plurality of cascaded linguistic encoding blocks; output an encoding result of the first linguistic encoding block to subsequent cascaded linguistic encoding blocks, and continue the acoustic encoding and encoding result outputting by using the subsequent cascaded linguistic encoding blocks until outputting the encoding result to the last linguistic encoding block; and use an encoding result outputted by the last linguistic encoding block as the linguistic features of the target text.

In some embodiments, each linguistic encoding block includes an attention layer, an activation network layer, a dropout & add layer, and a layer normalization layer; the generation module 5552 is further configured to perform attention processing on an encoding result outputted by a $(k-1)^{th}$ linguistic encoding block by using the attention layer included in a $k^{th}$ linguistic encoding block, to obtain a first attention feature of the $k^{th}$ linguistic encoding block; map the first attention feature of the $k^{th}$ linguistic encoding block by using the activation network layer included in the $k^{th}$ linguistic encoding block, to obtain a mapping feature of the $k^{th}$ linguistic encoding block; perform dropout & add processing on the mapping feature of the $k^{th}$ linguistic encoding block and the first attention feature of the $k^{th}$ linguistic encoding block by using the dropout & add layer included in the $k^{th}$ linguistic encoding block, to obtain a dropout & add feature of the $k^{th}$ linguistic encoding block; and normalize the dropout & add feature of the $k^{th}$ linguistic encoding block by using the layer normalization layer included in the $k^{th}$ linguistic encoding block, to obtain an encoding result of the $k^{th}$ linguistic encoding block, and output the encoding result of the $k^{th}$ linguistic encoding block, k being a sequentially ascending positive integer, $1<k<K$, and K being a number of the linguistic encoding blocks.

In some embodiments, the prior encoder includes a frame-level encoder, and the acoustic features of the phonemes include the number of audio frames including the phonemes; the generation module 5552 is further configured to determine an initial feature of the audio frame corresponding to the target text based on the number of audio frames including the phonemes and the text feature of each phoneme; and the preset style information and the initial feature of the audio frame are fused by using the frame-level encoder, to obtain audio features corresponding to the target text.

In some embodiments, the generation module 5552 is further configured to perform attention processing on the preset style information and the initial feature of the audio frame to obtain a second attention feature; perform style adaptive instance normalization processing on the second attention feature to obtain a style normalization feature; map the style normalization feature to obtain a mapping feature; and perform style adaptive instance normalization processing on the mapping feature to obtain audio features corresponding to the target text.

So far, the audio synthesis model training method according to this embodiment of the present disclosure has been described with reference to exemplary application and implementation of the electronic device according to this embodiment of the present disclosure. How modules in an audio synthesis model training apparatus 556 according to an embodiment of the present disclosure cooperate to implement an audio synthesis model training solution is continuously described below.

An acquisition module 5561 is configured to acquire sample linguistic information and sample style information for a text sample, a waveform annotation of the text sample, and a spectrogram corresponding to the waveform annotation; a posterior module 5562 is configured to encode the spectrogram corresponding to the waveform annotation and the sample style information by using the posterior encoder, to obtain a latent variable of the spectrogram; a decoding module 5563 is configured to perform waveform decoding on the latent variable of the spectrogram by using the waveform decoder, to obtain a synthetic waveform conforming to the audio style described in the sample style information and corresponding to the text sample; a discrimination module 5564 is configured to discriminate the synthetic waveform and the waveform annotation by using the discriminator, to obtain a discrimination result; a prior module 5565 is configured to encode the sample linguistic information and the sample style information by using the prior encoder, to obtain a latent variable of the text sample; and a training module 5566 is configured to train the audio synthesis model based on the latent variable of the text sample, the latent variable of the spectrogram and the discrimination result to obtain a trained audio synthesis model.

In some embodiments, the training module 5566 is further configured to train a waveform decoder and a discriminator included in the audio synthesis model based on the discrimination result; and train a prior encoder included in the audio synthesis model based on the latent variable of the text sample and the latent variable of the spectrogram.

In some embodiments, the posterior module 5562 is further configured to perform the following processing by using the posterior encoder: performing causal residual processing on the spectrogram corresponding to the waveform annotation and the sample style information to obtain a causal residual result; perform style adaptive instance normalization processing on the causal residual result to obtain a style normalization feature; perform linear projection on the style normalization feature to obtain statistical features of posterior distribution; and reparameterize the statistical features of posterior distribution to obtain a latent variable of the spectrogram.

An embodiment of the present disclosure provides a computer program product including a computer program or computer-executable instructions, the computer program or the computer-executable instructions being stored in a computer-readable storage medium. A processor of an electronic device reads the computer program or the computer-executable instructions from the computer-readable storage medium, and the processor executes the computer program or the computer-executable instructions, so that the electronic device performs the audio synthesis method or the audio synthesis model training method in the embodiments of the present disclosure.

An embodiment of the present disclosure provides a computer-readable storage medium having computer-executable instructions or a computer program stored therein. The computer-executable instructions or the computer program, when executed by a processor, causes the processor to perform the audio synthesis method or the audio synthesis model training method provided in the embodiments of the present disclosure, such as the audio synthesis method shown in FIG. 3A.

In some embodiments, the computer-readable storage medium may be a memory such as a ferroelectric RAM (FRAM), an ROM, a programmable ROM (PROM), an electrically programmable ROM (EPROM), an electrically erasable programmable ROM (EEPROM), a flash memory, a magnetic surface memory, an optical disk, or a compact disc read-only memory (CD-ROM), or may be any device including one of or any combination of the above memories.

In some embodiments, the computer-executable instructions may be written in any form of programming language (including a compiled or interpreted language, or a declarative or procedural language) in a form of a program, software, a software module, a script, or code, and may be deployed in any form, including being deployed as an independent program or being deployed as a module, a component, a subroutine, or another unit applicable for use in a computing environment.

In an example, the computer-executable instructions may but do not necessarily correspond to a file in a file system, and may be stored as a part of a file that saves other programs or data, for example, stored in one or more scripts in a hyper text markup language (HTML) document, stored in a single file dedicated to a discussed program, or stored in a plurality of collaborative files (for example, files that store one or more modules, subprograms, or code parts).

In an example, the computer-executable instructions may be deployed to be executed on an electronic device, or executed on a plurality of electronic devices at the same location, or executed on a plurality of electronic devices distributed in a plurality of locations and interconnected by a communication network. The above only describes the embodiments of the present disclosure and is not intended to limit a protection scope of the present disclosure. Any modification, equivalent replacement, improvement, and the like made within the spirit and the scope of the present disclosure are to be included within the protection scope of the present disclosure.

**Claims**

1.  A method for audio synthesis, executable by an electronic device, the method comprising:
    invoking an audio synthesis model based on linguistic information and preset style information for a target text to perform following operations, the audio synthesis model comprising a prior encoder and a waveform decoder:

    generating audio features corresponding to the target text based on the linguistic information and the preset style information using the prior encoder;
    performing normalizing flow processing on the audio features using the prior encoder, to obtain a latent variable of the target text; and
    performing waveform decoding on the latent variable of the target text using the waveform decoder, to obtain a synthetic waveform conforming to an audio style described in the preset style information and corresponding to the target text.

2.  The method according to claim 1, wherein performing the normalizing flow processing on the audio features to obtain the latent variable of the target text comprises:

    performing linear projection on the audio features to obtain statistical features of prior distribution; and
    performing reversible transformation on the statistical features of prior distribution to obtain the latent variable of the target text.

3.  The method according to claim 1 or 2, wherein

    the waveform decoder is a generator in a generative adversarial network; and
    performing the waveform decoding on the latent variable of the target text using the waveform decoder, to obtain the synthetic waveform conforming to the audio style described in the preset style information and corresponding to the target text comprises:
    performing the following operations using the generator in the generative adversarial network:

    convolving the latent variable of the target text to obtain a convolution result;
    performing anti-aliased multi-periodicity synthesis processing on the convolution result to obtain a semantic feature; and
    performing non-linear mapping on the semantic feature to obtain the synthetic waveform conforming to the audio style described in the preset style information and corresponding to the target text.

4.  The method according to claim 3, wherein performing the anti-aliased multi-periodicity synthesis processing on the convolution result to obtain the semantic feature comprises:

    performing transposed convolution on the convolution result to obtain a transposed convolution feature; and
    performing anti-aliased multi-periodicity synthesis operation on the transposed convolution feature to obtain the semantic feature.

5.  The method according to any one of claims 1 to 4, wherein generating the audio features corresponding to the target text based on the linguistic information and the preset style information using the prior encoder comprises performing the following operations using the prior encoder:

    performing phoneme-level encoding on the linguistic information to obtain text features of phonemes in the linguistic information;
    determining acoustic features of the phonemes based on the text features of the phonemes and the preset style information; and

performing audio frame-level encoding on the acoustic features of the phonemes to obtain audio features corresponding to the target text.

6. The method according to claim 5, wherein

the prior encoder comprises a linguistic encoder; and
performing the phoneme-level encoding on the linguistic information to obtain the text features of phonemes in the linguistic information comprises:

performing acoustic encoding on the linguistic information using the linguistic encoder, to obtain linguistic features of the target text, wherein the linguistic features comprise text features of a plurality of phonemes and text features of a plurality of prosodies; and
extracting the text features of the plurality of phonemes from the linguistic features.

7. The method according to claim 6, wherein

the linguistic encoder comprises a plurality of cascaded linguistic encoding blocks; and
performing the acoustic encoding on the linguistic information using the linguistic encoder, to obtain the linguistic features of the target text comprises:

performing acoustic encoding on the linguistic information using a first linguistic encoding block among the plurality of cascaded linguistic encoding blocks;
outputting an encoding result of the first linguistic encoding block to subsequent cascaded linguistic encoding blocks, and continuing the acoustic encoding and encoding result outputting using the subsequent cascaded linguistic encoding blocks until outputting the encoding result to the last linguistic encoding block; and
using an encoding result outputted by the last linguistic encoding block as the linguistic features of the target text.

8. The method according to claim 7, wherein

each linguistic encoding block in the plurality of cascaded linguistic encoding blocks comprises an attention layer, an activation network layer, a dropout and add layer, and a layer normalization layer; and
continuing the acoustic encoding and encoding result outputting using the subsequent cascaded linguistic encoding blocks comprises:

performing attention processing on an encoding result outputted by a $(k-1)^{th}$ linguistic encoding block using the attention layer comprised in a $k^{th}$ linguistic encoding block, to obtain a first attention feature of the $k^{th}$ linguistic encoding block;
performing a mapping processing on the first attention feature of the $k^{th}$ linguistic encoding block using the activation network layer comprised in the $k^{th}$ linguistic encoding block, to obtain a mapping feature of the $k^{th}$ linguistic encoding block;
performing dropout and add processing on the mapping feature of the $k^{th}$ linguistic encoding block and the first attention feature of the $k^{th}$ linguistic encoding block using the dropout and add layer comprised in the $k^{th}$ linguistic encoding block, to obtain a dropout and add feature of the $k^{th}$ linguistic encoding block; and
normalizing the dropout and add feature of the $k^{th}$ linguistic encoding block using the layer normalization layer comprised in the $k^{th}$ linguistic encoding block, to obtain an encoding result of the $k^{th}$ linguistic encoding block, and outputting the encoding result of the $k^{th}$ linguistic encoding block, k being a sequentially ascending positive integer, $1<k<K$, and K being a number of the linguistic encoding blocks.

9. The method according to claim 5, wherein

the prior encoder comprises a frame-level encoder, and the acoustic features of the phonemes comprise a number of audio frames comprising the phonemes; and
performing the audio frame-level encoding on the acoustic features of the phonemes to obtain the audio features corresponding to the target text comprises:

determining an initial feature corresponding to the target text based on the number of audio frames comprising the phonemes and the text feature of each phoneme; and

fusing the preset style information and the initial feature using the frame-level encoder, to obtain the audio features corresponding to the target text.

10. The method according to claim 9, wherein fusing the preset style information and the initial feature of the audio frame using the frame-level encoder, to obtain the audio features corresponding to the target text comprises:

performing attention processing on the preset style information and the initial feature to obtain a second attention feature;

performing style adaptive instance normalization processing on the second attention feature to obtain a style normalization feature;

performing a mapping processing on the style normalization feature to obtain a mapping feature; and

performing style adaptive instance normalization processing on the mapping feature to obtain the audio features corresponding to the target text.

11. A method for training an audio synthesis model, applied to an electronic device, the audio synthesis model comprising a prior encoder, a posterior encoder, a waveform decoder, and a discriminator; and the method comprising:

acquiring sample linguistic information and sample style information for a text sample, a waveform annotation of the text sample, and a spectrogram corresponding to the waveform annotation;

encoding the spectrogram corresponding to the waveform annotation and the sample style information using the posterior encoder, to obtain a latent variable of the spectrogram;

performing waveform decoding on the latent variable of the spectrogram using the waveform decoder, to obtain a synthetic waveform conforming to an audio style described in the sample style information and corresponding to the text sample;

discriminating the synthetic waveform and the waveform annotation using the discriminator, to obtain a discrimination result;

encoding the sample linguistic information and the sample style information using the prior encoder, to obtain a latent variable of the text sample; and

training the audio synthesis model based on the latent variable of the text sample, the latent variable of the spectrogram and the discrimination result to obtain a trained audio synthesis model.

12. The method according to 11, wherein training the audio synthesis model based on the latent variable of the text sample, the latent variable of the spectrogram and the discrimination result comprises:

training the waveform decoder and the discriminator in the audio synthesis model based on the discrimination result; and

training the prior encoder in the audio synthesis model based on the latent variable of the text sample and the latent variable of the spectrogram.

13. The method according to claim 11 or 12, wherein encoding the spectrogram corresponding to the waveform annotation and the sample style information using the posterior encoder, to obtain the latent variable of the spectrogram comprises performing the following operations using the posterior encoder:

performing causal residual processing on the spectrogram corresponding to the waveform annotation and the sample style information to obtain a causal residual result;

performing style adaptive instance normalization processing on the causal residual result to obtain a style normalization feature;

performing linear projection on the style normalization feature to obtain statistical features of posterior distribution; and

re-parameterizing the statistical features of posterior distribution to obtain a latent variable of the spectrogram.

14. An apparatus for audio synthesis, comprising:

an invoking module, configured to invoke an audio synthesis model based on linguistic information and preset style information for a target text, wherein the audio synthesis model comprises a prior encoder and a waveform decoder:

a generation module, configured to generate audio features corresponding to the target text based on the linguistic information and the preset style information using the prior encoder;

a normalization module, configured to perform normalizing flow processing on the audio features using the prior encoder, to obtain a latent variable of the target text; and

a waveform decoding module, configured to perform waveform decoding on the latent variable of the target text using the waveform decoder, to obtain a synthetic waveform conforming to an audio style described in the preset style information and corresponding to the target text.

15. An electronic device, comprising:

a memory, configured to store a computer program or computer-executable instructions; and

a processor, configured to, when executing the computer program or the computer-executable instructions stored in the memory, implement the method for audio synthesis according to any one of claims 1 to 10, or the method for training an audio synthesis model according to any one of claims 11 to 13.

16. A computer-readable storage medium having a computer program or computer-executable instructions stored therein, which, when executed by a processor, implementing the method for audio synthesis according to any one of claims 1 to 10, or the method for training an audio synthesis model according to any one of claims 11 to 13.

17. A computer program product, comprising a computer program or computer-executable instructions, which, when executed by a processor, implementing the method for audio synthesis according to any one of claims 1 to 10, or the method for training an audio synthesis model according to any one of claims 11 to 13.

FIG. 1

FIG. 2A

Electronic device 500

Memory 550

Operating system 551

Network communication module 552

Audio synthesis model training apparatus 556

Acquisition module 5561

Posterior module 5562

Decoding module 5563

Discrimination module 5564

Prior module 5565

Training module 5566

Network interface 520

Processor 510

540

User interface 530

FIG. 2B

| Invoke an audio synthesis model based on linguistic information and preset style information of a target text to perform the following processing | 101 |

| Generate audio features corresponding to the target text based on the linguistic information and the preset style information by using a prior encoder | 102 |

| Perform normalizing flow processing on the audio features by using the prior encoder, to obtain a latent variable of the target text | 103 |

| Perform waveform decoding on the latent variable of the target text by using a waveform decoder, to obtain a synthetic waveform conforming to an audio style described in the preset style information and corresponding to the target text | 104 |

FIG. 3A

Invoke an audio synthesis model based on linguistic information and preset style information of a target text to perform the following processing — 101

Generate audio features corresponding to the target text based on the linguistic information and the preset style information by using a prior encoder — 102

Perform the following processing by using the prior encoder: performing phoneme-level encoding on the linguistic information to obtain text features of phonemes in the linguistic information — 1021

Determine acoustic features of the phonemes based on the text features of the phonemes and the preset style information — 1022

Perform audio frame-level encoding on the acoustic features of the phonemes to obtain audio features corresponding to the target text — 1023

Perform normalizing flow processing on the audio features by using the prior encoder, to obtain a latent variable of the target text — 103

Perform waveform decoding on the latent variable of the target text by using a waveform decoder, to obtain a synthetic waveform conforming to an audio style described in the preset style information and corresponding to the target text — 104

FIG. 3B

Perform the following processing by using a prior encoder: performing phoneme-level encoding on linguistic information to obtain text features of phonemes in the linguistic information — 1021

Perform acoustic encoding on the linguistic information by using a linguistic encoder, to obtain linguistic features of a target text, the linguistic features including text features of a plurality of phonemes and text features of a plurality of prosodies — 10211

Extract the text features of the plurality of phonemes from the linguistic features — 10212

FIG. 3C

Perform acoustic encoding on linguistic information by using a first linguistic encoding block among a plurality of cascaded linguistic encoding blocks

Perform attention processing on the linguistic information by using an attention layer included in the first linguistic encoding block, to obtain a first attention feature of the first linguistic encoding block — 102111

Map the first attention feature of the first linguistic encoding block by using an activation network layer included in the first linguistic encoding block, to obtain a mapping feature of the first linguistic encoding block — 102112

## FIG. 3D

Perform audio frame-level encoding on acoustic features of phonemes to obtain audio features corresponding to a target text — 1023

Determine an initial feature corresponding to the target text based on a number of audio frames occupied by the phonemes and texts feature of the phonemes — 10231

Fuse preset style information and the initial feature by using a frame-level encoder, to obtain audio features corresponding to the target text — 10232

## FIG. 3E

Fuse preset style information and an initial feature by using a
frame-level encoder, to obtain audio features corresponding to a
target text — 10232

Perform attention processing on the preset style information
and the initial feature to obtain a second attention feature — 102321

Perform style adaptive instance normalization processing on
the second attention feature to obtain a style normalization
feature — 102322

Map the style normalization feature to obtain a mapping
feature — 102323

Perform style adaptive instance normalization processing on
the mapping feature to obtain audio features corresponding to
the target text — 102324

FIG. 3F

Acquire sample linguistic information and sample style information of a text sample, a waveform annotation of the text sample, and a spectrogram corresponding to the waveform annotation — 201

Encode the spectrogram corresponding to the waveform annotation and the sample style information by using a posterior encoder, to obtain a latent variable of the spectrogram — 202

Perform waveform decoding on the latent variable of the spectrogram by using a waveform decoder to obtain a synthetic waveform conforming to an audio style described in the sample style information and corresponding to the text sample — 203

Discriminate the synthetic waveform and the waveform annotation by using a discriminator, to obtain a discrimination result — 204

Encode the sample linguistic information and the sample style information by using a prior encoder, to obtain a latent variable of the text sample — 205

Train an audio synthesis model based on the latent variable of the text sample, the latent variable of the spectrogram and the discrimination result to obtain a trained audio synthesis model — 206

FIG. 4A

Acquire sample linguistic information and sample style information of a text sample, a waveform annotation of the text sample, and a spectrogram corresponding to the waveform annotation — 201

↓

Encode the spectrogram corresponding to the waveform annotation and the sample style information by using a posterior encoder, to obtain a latent variable of the spectrogram — 202

Perform the following processing by using the posterior encoder: performing causal residual processing on the spectrogram corresponding to the waveform annotation and the sample style information to obtain a causal residual result — 2021

↓

Perform style adaptive instance normalization processing on the causal residual result to obtain a style normalization feature — 2022

↓

Perform linear projection on the style normalization feature to obtain statistical features of posterior distribution — 2023

↓

Reparameterize the statistical features of posterior distribution to obtain a latent variable of the spectrogram — 2024

↓

Perform waveform decoding on the latent variable of the spectrogram by using a waveform decoder to obtain a synthetic waveform conforming to an audio style described in the sample style information and corresponding to the text sample — 203

↓

Discriminate the synthetic waveform and the waveform annotation by using a discriminator, to obtain a discrimination result — 204

↓

Encode the sample linguistic information and the sample style information by using a prior encoder, to obtain a latent variable of the text sample — 205

↓

Train an audio synthesis model based on the latent variable of the text sample, the latent variable of the spectrogram and the discrimination result to obtain a trained audio synthesis model — 206

FIG. 4B

FIG. 5

FIG. 6

Style-AdaIN layer

Dropout & Add layer

2 Conv1d layers

$\times M$

Style-AdaIN layer

Multi-head self-attention layer

Style encoding block

# FIG. 7

Reparameterize ← $\varepsilon$

$\mu_\varphi, \sigma_\varphi$

Linear projection layer

Style-AdaIN layer

WaveNet residual blocks

$\times N$

Spectrogram

Posterior encoder

# FIG. 8

FIG. 9

FIG. 10

## INTERNATIONAL SEARCH REPORT

| International application No. |
| --- |
| **PCT/CN2024/116772** |

| A. | CLASSIFICATION OF SUBJECT MATTER |
| --- | --- |

G10L 13/047(2013.01)i; G10L25/30(2013.01)i; G06N3/0442(2023.01)i

According to International Patent Classification (IPC) or to both national classification and IPC

| B. | FIELDS SEARCHED |
| --- | --- |

Minimum documentation searched (classification system followed by classification symbols)

IPC:G10L/-; G06N/-

Documentation searched other than minimum documentation to the extent that such documents are included in the fields searched

Electronic data base consulted during the international search (name of data base and, where practicable, search terms used)

CNABS, CJFD, CNTXT, ENTXTC, WPABSC, DWPI, CNKI: 腾讯科技, 顾宇, 翁超, 编码, 变量, 标注, 标准, 标准化, 波形, 词向量, 词语, 发音, 风格, 个性, 归一化, 归一化流, 语音合成, 后验编码, 鉴别, 鉴定, 节奏, 解码, 可逆, 可逆变换, 流, 梅尔, 频谱, 嵌入, 情绪, 识别, 说话人, 统计, 文本, 先验编码, 先验分布, 音频特征, 隐 2w (or 特征, 状态, 变量, 信息, 表示), 隐层, 语调, 语速, 语言, 转换, 状态, priori coding, pre-encoder, posteriori coding, waveform decoder, embedding, style, nvertible transform, speaker, statistics, flow, mel, mfcc, normalizing 1w flow, hidden variable, TTS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117373431 A (TENCENT TECHNOLOGY (SHENZHEN) CO., LTD.) 09 January 2024 (2024-01-09)<br>claims 1-17 | 1-17 |
| A | CN 113327574 A (GUANGZHOU HUYA TECHNOLOGY CO., LTD. et al.) 31 August 2021 (2021-08-31)<br>description, paragraphs 30-320 | 1-17 |
| A | CN 115578490 A (INSTITUTE OF COMPUTING TECHNOLOGY, CHINESE ACADEMY OF SCIENCES) 06 January 2023 (2023-01-06)<br>entire document | 1-17 |
| A | CN 114005428 A (IFLYTEK CO., LTD.) 01 February 2022 (2022-02-01)<br>entire document | 1-17 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 November 2024** | **23 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 745 956 A1**

## INTERNATIONAL SEARCH REPORT

International application No.

**PCT/CN2024/116772**

### C. DOCUMENTS CONSIDERED TO BE RELEVANT

| Category* | Citation of document, with indication, where appropriate, of the relevant passages | Relevant to claim No. |
|---|---|---|
| A | CN 114913877 A (PING AN TECHNOLOGY (SHENZHEN) CO., LTD.) 16 August 2022 (2022-08-16) entire document | 1-17 |
| A | CN 116469375 A (PING AN TECHNOLOGY (SHENZHEN) CO., LTD.) 21 July 2023 (2023-07-21) entire document | 1-17 |
| A | KR 20220165526 A (KAKAO ENTERPRISE CORP.) 15 December 2022 (2022-12-15) entire document | 1-17 |
| A | US 11017763 B1 (AMAZON TECHNOLOGY INC.) 25 May 2021 (2021-05-25) entire document | 1-17 |

Form PCT/ISA/210 (second sheet) (July 2022)

42

**INTERNATIONAL SEARCH REPORT**
Information on patent family members

International application No.

**PCT/CN2024/116772**

| Patent document cited in search report | | | Publication date (day/month/year) | Patent family member(s) | Publication date (day/month/year) |
|---|---|---|---|---|---|
| CN | 117373431 | A | 09 January 2024 | None | |
| CN | 113327574 | A | 31 August 2021 | None | |
| CN | 115578490 | A | 06 January 2023 | None | |
| CN | 114005428 | A | 01 February 2022 | None | |
| CN | 114913877 | A | 16 August 2022 | None | |
| CN | 116469375 | A | 21 July 2023 | None | |
| KR | 20220165526 | A | 15 December 2022 | None | |
| US | 11017763 | B1 | 25 May 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311307828